# EUROPEAN PATENT SPECIFICATION

(11) **EP 4 425 902 B1**
(45) Date of publication and mention of the grant of the patent: **28.10.2026**
(21) Application number: 22909729.0
(22) Date of filing: 06.12.2022
(51) Int. Cl.: H04M 1/67, H04M 1/02, G06F 3/04817, G06F 9/451, G06F 21/31, H04M 1/72463, G06F 21/32

(54) **MULTI-SCREEN UNLOCKING METHOD AND ELECTRONIC DEVICE**
ENTRIEGELUNGSVERFAHREN FÜR MEHRERE BILDSCHIRME UND ELEKTRONISCHE VORRICHTUNG
PROCÉDÉ DE DÉVERROUILLAGE MULTI-ÉCRAN ET DISPOSITIF ÉLECTRONIQUE

(30) Priority: 22.12.2021 CN 202111585380
(43) Date of publication of application: 04.09.2024
(73) Proprietor: Huawei Technologies Co., Ltd., Shenzhen, Guangdong 518129 (CN)
(72) Inventor: LI, Ziling, Shenzhen, Guangdong 518129 (CN); ZHANG, Ming, Shenzhen, Guangdong 518129 (CN)
(74) Representative: Pfenning, Meinig & Partner mbB
(86) International application number: PCT/CN2022/136860
(87) International publication number: WO 2023/116414

(56) References cited:
- EP-A1- 3 916 534
- CN-A- 104 052 873
- CN-A- 106 919 337
- CN-A- 109 190 356
- CN-A- 109 460 140
- CN-A- 110 177 167
- CN-A- 113 542 462
- US-A1- 2015 212 681
- US-A1- 2020 117 350
- ANDROID INFOSEC: "How to unlock PIN protected Android device using ADB and HID method | Brute force | Rubber Ducky", 4 May 2021 (2021-05-04), XP093214507, Retrieved from the Internet <URL:https://www.youtube.com/watch?v=x5Rt93jshC8> [retrieved on 20241014]

## Description

### TECHNICAL FIELD

This application relates to the field of electronic technologies, and in particular, to a multi-screen unlocking method and an electronic device.

### BACKGROUND

With rapid development of electronic devices, an electronic device has more than one display. For example, a foldable mobile phone may include a large screen and a small screen. The large screen may be a display that is most frequently used by a user of the foldable mobile phone, has a complete display capability, and has a complete status bar, a navigation bar, a launcher icon, and the like. The user can complete most routine operations on the large screen. The small screen may be a smaller screen, has a weak display capability, and can display only some simple element content, for example, time, weather, and a battery level.

CN 109460140 A discloses a screen unlocking method applied to a dual-screen mobile terminal.

Android Infosec: "How to unlock PIN protected Android device using ADB and HID method | Brute force | Rubber Ducky", 4 May 2021, describes how to unlock a PIN protected Android device using a brute force method.

US 2015/212681 describes a head-mounted display that includes a display section that displays a display image, and a display control section that performs a control process that displays the display image on the display section.

EP 3916534 describes a shortcut function enabling method in which an electronic device may collect an air gesture of a user by using a camera, recognize the air gesture of the user, obtain a facial feature of the user, and verify whether the obtained facial feature is a facial feature entered by the user or a stored facial feature.

US 2020/117350 describes a screen locking method that includes establishing, by a first electronic device, a coupling to a second electronic device, sending, by the first electronic device, to-be-displayed data to the second electronic device to enable the second electronic device to display a first interface, and in this case, the first electronic device displays a second interface different from the first interface, obtaining, by the first electronic device, a first screen locking operation from a user, where the first screen locking operation instructs to lock a screen of the second electronic device, and sending, by the first electronic device, a screen locking instruction to the second electronic device in response to the first screen locking operation whereby the second electronic device enters a screen-locked state.

### SUMMARY

Embodiments of this application provide a multi-screen unlocking method and apparatus, and an electronic device, to enrich screen lock display of a small screen, thereby implementing differentiated display on each screen and improving user experience. The scope of protection of the present invention is set out by the appended claims.

To achieve the foregoing objectives, the following technical solutions are used in embodiments of this application.

According to a first aspect, an embodiment of this application provides a multi-screen unlocking method, applied to an electronic device. The electronic device includes a first display and a second display, the first display corresponds to a first application, and the second display corresponds to a second application. The method may include: In response to receiving a first operation performed by a user on the electronic device, the electronic device determines that a status of the electronic device is a screen-locked state. The first display displays a first screen lock interface by using the first application, and the second display displays a second screen lock interface by using the second application, where the first screen lock interface is different from the second screen lock interface. The second application sends a first message to the first application in response to receiving a second operation performed by the user on the second display. In response to the first message, the first application displays a first unlocked interface by using the first display, and indicates the electronic device to switch from the screen-locked state to an unlocked state. The first application sends a second message to the second application. In response to the second message, the second application displays a second unlocked interface by using the second display.

The first display may be a primary screen (or referred to as a large screen), and the second display may be a secondary screen (or referred to as a small screen). Certainly, the first display may be a secondary screen, and the second display may be a primary screen. This is not specifically limited in this embodiment of this application. In this embodiment of this application, "the first display may be a primary screen, and the second display may be a secondary screen" is used as an example for description.

In this embodiment of this application, the first display is locked by using the first application, and the second display is locked by using the second application. The first application and the second application are two independent applications. In this way, the first display and the second display may display two different screen lock interfaces, thereby implementing differentiated display on each screen. In addition, the first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

In a specific implementation, the electronic device further includes a password manager, and that the second application sends a first message to the first application in response to receiving a second operation performed by the user on the second display may be specifically: The second display displays a first interface in response to receiving the second operation performed by the user on the second display, where the first interface includes a password input area. In response to receiving an operation of entering a password in the password input area by the user, the second application sends the first message to the first application, where the first message carries the password. The first application is used to send the password to the password manager, and the password manager performs verification on the password; and after the verification on the password succeeds, the first application displays the first unlocked interface by using the first display.

In a specific implementation, the electronic device further includes a password manager, and that the second application sends a first message to the first application in response to receiving a second operation performed by the user on the second display may be specifically: The second display displays first prompt information in response to receiving the second operation performed by the user on the second display, where the first prompt information is used to prompt the user to perform unlocking in a preset unlocking manner.

In a specific implementation, the electronic device further includes a face authentication manager, and the first message carries face authentication indication information. The first application is further used to send the first message to the face authentication manager, and the face authentication manager performs, based on the first message, authentication on a face image captured by the electronic device; and after the authentication on the face image succeeds, the first application displays the first unlocked interface by using the first display.

In some implementations, the method may further include: The second display displays second prompt information in response to receiving the second operation performed by the user on the second display, where the second prompt information is used to inform the user that facial recognition is being performed.

In a specific implementation, a display form of the second prompt information includes a text, an image, or a breathing status icon.

In some implementations, the method may further include: when a screen status of the second display is a screen-locked state, switching an interface of the second display from the second screen lock interface to a second interface in response to receiving a third operation performed by the user on the second display, where the second interface is used to display a pull-down notification bar, a notification, a widget of a third application, or an application icon of the third application.

In a specific implementation, the first screen lock interface includes time, a date, and a lock icon; and the second screen lock interface includes at least one of the following: an application icon, a notification message, a weather condition, navigation information, and unlocking prompt information.

According to a second aspect, an embodiment of this application provides a multi-screen unlocking method, applied to an electronic device. The electronic device includes a first display and a second display, the first display corresponds to a first application, and the second display corresponds to a second application. The method may include: In response to receiving a first operation performed by a user on the electronic device, the electronic device determines that a status of the electronic device is a screen-locked state. The first display displays a first screen lock interface by using the first application, and the second display displays a second screen lock interface by using the second application, where the first screen lock interface is different from the second screen lock interface. The second display displays a second unlocked interface in response to receiving a second operation performed by the user on the second display. The second application indicates the electronic device to switch from the screen-locked state to an unlocked state, and sends a first message to the first application. In response to the first message, the first application displays a first unlocked interface by using the first display.

The first display may be a primary screen (or referred to as a large screen), and the second display may be a secondary screen (or referred to as a small screen). Certainly, the first display may be a secondary screen, and the second display may be a primary screen. This is not specifically limited in this embodiment of this application. In this embodiment of this application, "the first display may be a primary screen, and the second display may be a secondary screen" is used as an example for description.

In this embodiment of this application, the first display is locked by using the first application, and the second display is locked by using the second application. The first application and the second application are two independent applications. In this way, the first display and the second display may display two different screen lock interfaces. In addition, the first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

In this embodiment of this application, the first display is locked by using the first application, and the second display is locked by using the second application. The first application and the second application are two independent applications. The first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

In a specific implementation, the electronic device further includes a password manager, and that the second application exits the second screen lock interface in response to receiving a second operation performed by the user on the second display may be specifically: The second display displays a first interface in response to receiving the second operation performed by the user on the second display, where the first interface includes a password input area. In response to receiving an operation of entering a password in the password input area by the user, the second application sends the password to the password manager by using the first application. The password manager performs verification on the password. After the verification on the password succeeds, the second display displays the second unlocked interface.

In a specific implementation, the electronic device further includes a password manager, and that the second application exits the second screen lock interface in response to receiving a second operation performed by the user on the second display may be specifically: The second display displays first prompt information in response to receiving the second operation performed by the user on the second display, where the first prompt information is used to prompt the user to perform unlocking in a preset unlocking manner.

In a specific implementation, the electronic device further includes a face authentication manager, and that the second display displays a second unlocked interface in response to receiving a second operation performed by the user on the second display may be specifically: The second application sends a second message to the first application in response to receiving the second operation performed by the user on the second display, where the second message carries face authentication indication information. The first application sends the second message to the face authentication manager. The face authentication manager performs, based on the second message, authentication on a face image captured by the electronic device. After the authentication on the face image succeeds, the second display displays the second unlocked interface.

In some implementations, the method may further include: The second display displays second prompt information in response to receiving the second operation performed by the user on the second display, where the second prompt information is used to inform the user that facial recognition is being performed.

In a specific implementation, a display form of the second prompt information may include a text, an image, or a breathing status icon.

In some implementations, the method may further include: when a screen status of the second display is a screen-locked state, switching an interface of the second display from the second screen lock interface to a second interface in response to receiving a third operation performed by the user on the second display, where the second interface is used to display a pull-down notification bar, a notification, a widget of a third application, or an application icon of the third application.

In a specific implementation, the first screen lock interface includes time, a date, and a lock icon; and the second screen lock interface includes at least one of the following: an application icon, a notification message, a weather condition, navigation information, and unlocking prompt information.

According to a third aspect, an embodiment of this application provides a multi-screen unlocking apparatus, applied to an electronic device. The electronic device includes a first display and a second display, the first display corresponds to a first application, and the second display corresponds to a second application. The apparatus may include: In response to receiving a first operation performed by a user on the electronic device, the electronic device determines that a status of the electronic device is a screen-locked state. The first display displays the first screen lock interface by using the first application, and the second display displays the second screen lock interface by using the second application, where the first screen lock interface is different from the second screen lock interface. The second application sends a first message to the first application in response to receiving a second operation performed by the user on the second display. In response to the first message, the first application displays a first unlocked interface by using the first display, and indicates the electronic device to switch from the screen-locked state to an unlocked state. The first application sends a second message to the second application. In response to the second message, the second application displays a second unlocked interface by using the second display.

The first display may be a primary screen (or referred to as a large screen), and the second display may be a secondary screen (or referred to as a small screen). Certainly, the first display may be a secondary screen, and the second display may be a primary screen. This is not specifically limited in this embodiment of this application. In this embodiment of this application, "the first display may be a primary screen, and the second display may be a secondary screen" is used as an example for description.

In this embodiment of this application, the first display is locked by using the first application, and the second display is locked by using the second application. The first application and the second application are two independent applications. In this way, the first display and the second display may display two different screen lock interfaces, thereby implementing differentiated display on each screen. In addition, the first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

In a specific implementation, the electronic device further includes a password manager, and that the second application sends a first message to the first application in response to receiving a second operation performed by the user on the second display may be specifically: The second display displays a first interface in response to receiving the second operation performed by the user on the second display, where the first interface includes a password input area. In response to receiving an operation of entering a password in the password input area by the user, the second application sends a first message to the first application, where the first message carries the password. The first application is used to send the password to the password manager, and the password manager performs verification on the password; and after the verification on the password succeeds, the first application displays the first unlocked interface by using the first display.

In a specific implementation, the electronic device further includes a password manager, and that the second application sends a first message to the first application in response to receiving a second operation performed by the user on the second display may be specifically: The second display displays first prompt information in response to receiving the second operation performed by the user on the second display, where the first prompt information is used to prompt the user to perform unlocking in a preset unlocking manner.

In a specific implementation, the electronic device further includes a face authentication manager, and the first message carries face authentication indication information. The first application is further used to send the first message to the face authentication manager, and the face authentication manager performs, based on the first message, authentication on a face image captured by the electronic device; and after the authentication on the face image succeeds, the first application displays the first unlocked interface by using the first display.

In some implementations, the apparatus may further include: The second display displays second prompt information in response to receiving the second operation performed by the user on the second display, where the second prompt information is used to inform the user that facial recognition is being performed.

In a specific implementation, a display form of the second prompt information includes a text, an image, or a breathing status icon.

In some implementations, the apparatus may further include: when a screen status of the second display is a screen-locked state, switching an interface of the second display from the second screen lock interface to a second interface in response to receiving a third operation performed by the user on the second display, where the second interface is used to display a pull-down notification bar, a notification, a widget of a third application, or an application icon of the third application.

In a specific implementation, the first screen lock interface includes time, a date, and a lock icon; and the second screen lock interface includes at least one of the following: an application icon, a notification message, a weather condition, navigation information, and unlocking prompt information.

According to a fourth aspect, an embodiment of this application provides a multi-screen unlocking apparatus, applied to an electronic device. The electronic device includes a first display and a second display, the first display corresponds to a first application, and the second display corresponds to a second application. The apparatus may include: In response to receiving a first operation performed by a user on the electronic device, the electronic device determines that a status of the electronic device is a screen-locked state. The first display displays the first screen lock interface by using the first application, and the second display displays the second screen lock interface by using the second application, where the first screen lock interface is different from the second screen lock interface. The second display displays a second unlocked interface in response to receiving a second operation performed by the user on the second display. The second application indicates the electronic device to switch from the screen-locked state to an unlocked state, and sends a first message to the first application. In response to the first message, the first application displays a first unlocked interface by using the first display.

The first display may be a primary screen (or referred to as a large screen), and the second display may be a secondary screen (or referred to as a small screen). Certainly, the first display may be a secondary screen, and the second display may be a primary screen. This is not specifically limited in this embodiment of this application. In this embodiment of this application, "the first display may be a primary screen, and the second display may be a secondary screen" is used as an example for description.

In this embodiment of this application, the first display is locked by using the first application, and the second display is locked by using the second application. The first application and the second application are two independent applications. In this way, the first display and the second display may display two different screen lock interfaces. In addition, the first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

In this embodiment of this application, the first display is locked by using the first application, and the second display is locked by using the second application. The first application and the second application are two independent applications. The first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

In a specific implementation, the electronic device further includes a password manager, and that the second application exits the second screen lock interface in response to receiving a second operation performed by the user on the second display may be specifically: The second display displays a first interface in response to receiving the second operation performed by the user on the second display, where the first interface includes a password input area. In response to receiving an operation of entering a password in the password input area by the user, the second application sends the password to the password manager by using the first application. The password manager performs verification on the password; and after the verification on the password succeeds, the second display displays the second unlocked interface.

In a specific implementation, the electronic device further includes a password manager, and that the second application exits the second screen lock interface in response to receiving a second operation performed by the user on the second display may be specifically: The second display displays first prompt information in response to receiving the second operation performed by the user on the second display, where the first prompt information is used to prompt the user to perform unlocking in a preset unlocking manner.

In a specific implementation, the electronic device further includes a face authentication manager, and that the second display displays a second unlocked interface in response to receiving a second operation performed by the user on the second display may be specifically: The second application sends a second message to the first application in response to receiving the second operation performed by the user on the second display, where the second message carries face authentication indication information. The first application sends the second message to the face authentication manager. The face authentication manager performs, based on the second message, authentication on a face image captured by the electronic device; and after the authentication on the face image succeeds, the second display displays the second unlocked interface.

In some implementations, the apparatus may further include: The second display displays second prompt information in response to receiving the second operation performed by the user on the second display, where the second prompt information is used to inform the user that facial recognition is being performed.

In a specific implementation, a display form of the second prompt information may include a text, an image, or a breathing status icon.

In some implementations, the apparatus may further include: when a screen status of the second display is a screen-locked state, switching an interface of the second display from the second screen lock interface to a second interface in response to receiving a third operation performed by the user on the second display, where the second interface is used to display a pull-down notification bar, a notification, a widget of a third application, or an application icon of the third application.

In a specific implementation, the first screen lock interface includes time, a date, and a lock icon; and the second screen lock interface includes at least one of the following: an application icon, a notification message, a weather condition, navigation information, and unlocking prompt information.

According to a fifth aspect, an embodiment of this application provides an electronic device, where the device includes one or more processors and a memory, the memory stores code, and when the code is executed by the electronic device, the electronic device is enabled to perform the method according to the first aspect.

According to a sixth aspect, an embodiment of this application provides a chip system. The chip system is applied to an electronic device. The chip system includes one or more interface circuits and one or more processors. The interface circuit and the processor are interconnected through a line. The interface circuit is configured to receive a signal from a memory of the electronic device, and send the signal to the processor, where the signal includes computer instructions stored in the memory. When the processor executes the computer instructions, the electronic device is enabled to perform the method according to the first aspect.

According to a seventh aspect, an embodiment of this application provides a computer-readable storage medium, including computer instructions. When the computer instructions are run on an electronic device and a server, the electronic device is enabled to perform the method according to the first aspect.

According to an eighth aspect, an embodiment of this application provides a computer program product. When the computer program product runs on a computer, the computer is enabled to perform the method according to the first aspect.

For specific implementations and corresponding technical effects of the embodiments in the third aspect to the eighth aspect, refer to the specific implementations and technical effects of the first aspect and the second aspect.

In this embodiment of this application, the first display is locked by using the first application, and the second display is locked by using the second application. The first application and the second application are two independent applications. In this way, the first display and the second display may display two different screen lock interfaces. In addition, the first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

### BRIEF DESCRIPTION OF DRAWINGS

FIG. 1A is a schematic diagram of a screen lock interface of a primary screen of a foldable mobile phone;
FIG. 1B is a schematic diagram of a screen lock interface of a secondary screen of a foldable mobile phone;
FIG. 2A is a schematic diagram of a screen lock interface of a primary screen of a foldable mobile phone according to an embodiment of this application;
FIG. 2B is a schematic diagram of a screen lock interface of a secondary screen of a foldable mobile phone according to an embodiment of this application;
FIG. 3 is a schematic diagram of a structure of an electronic device according to an embodiment of this application;
FIG. 4 is a schematic diagram of a software architecture of an electronic device according to an embodiment of this application;
FIG. 5A is a flowchart of a multi-screen unlocking method according to an embodiment of this application;
FIG. 5B is a flowchart of a multi-screen unlocking method according to an embodiment of this application;
FIG. 6A is a schematic diagram of an interface of a second display of an electronic device according to an embodiment of this application;
FIG. 6B is a schematic diagram of an interface of a second display of an electronic device according to an embodiment of this application;
FIG. 6C is a schematic diagram of an interface of a second display of an electronic device according to an embodiment of this application;
FIG. 7A is a schematic diagram of an interface of a second display of an electronic device according to an embodiment of this application;
FIG. 7B is a schematic diagram of an interface of a second display of an electronic device according to an embodiment of this application;
FIG. 7C is a schematic diagram of an interface of a second display of an electronic device according to an embodiment of this application;
FIG. 7D is a schematic diagram of an interface of a second display of an electronic device according to an embodiment of this application;
FIG. 8A is a schematic diagram of an interface of a first display of an electronic device according to an embodiment of this application;
FIG. 8B is a schematic diagram of an interface of a first display of an electronic device according to an embodiment of this application;
FIG. 8C is a schematic diagram of an interface of a first display of an electronic device according to an embodiment of this application;
FIG. 8D is a schematic diagram of an interface of a second display of an electronic device according to an embodiment of this application;
FIG. 9A is a schematic diagram of an interface of a second display of an electronic device according to an embodiment of this application;
FIG. 9B is a schematic diagram of an interface of a second display of an electronic device according to an embodiment of this application; and
FIG. 10 is a schematic diagram of another structure of an electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

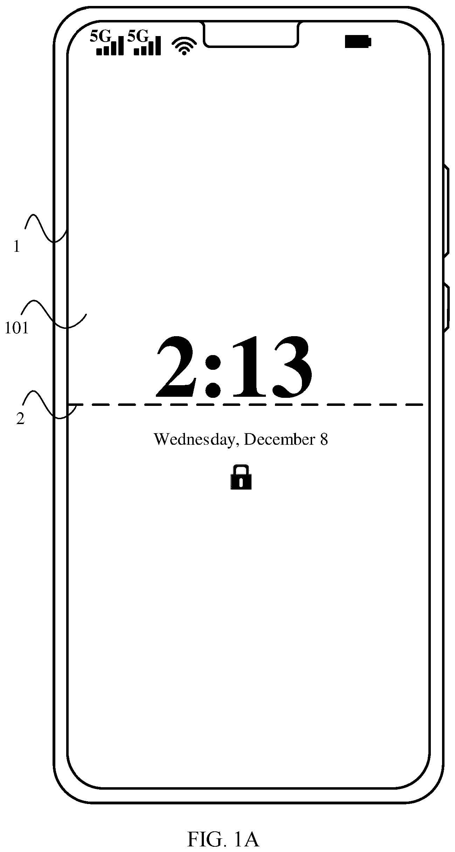

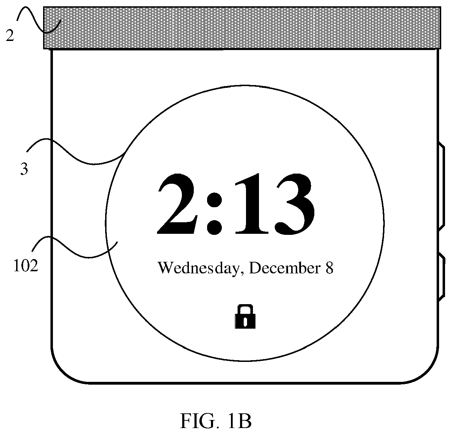

Currently, an electronic device has more than one display. For example, the electronic device may be a foldable mobile phone. In FIG. 1A, the foldable mobile phone is in an unfolded state, 2 shown in FIG. 1A is a folding line, and the foldable mobile phone in FIG. 1B is in a folded state. The foldable mobile phone may include a primary screen 1 and a secondary screen 3. When both the primary screen and the secondary screen are in a screen-locked state, the primary screen 1 displays a screen lock interface 101 shown in FIG. 1A, and the secondary screen 3 displays a screen lock interface 102 shown in FIG. 1B. It can be learned that the screen lock interface 101 is the same as the screen lock interface 102. When a user unlocks the secondary screen, the user needs to perform an unlocking operation on the screen lock interface 101 of the primary screen. The primary screen of the foldable mobile phone receives the unlocking operation of the user. In response to the unlocking operation, the primary screen of the foldable mobile phone is unlocked, and the secondary screen of the foldable mobile phone is indicated to be unlocked. In this way, in a process in which the user unlocks the secondary screen of the foldable mobile phone, the user needs to operate the primary screen to perform unlocking, so as to unlock the secondary screen. Consequently, real-time unlocking performance of the secondary screen is low, and user experience is poor.

To resolve the foregoing technical problem, in this embodiment of this application, in response to receiving a first operation performed by the user on the electronic device, the electronic device determines that a status of the electronic device is a screen-locked state. In this case, a first display displays a first screen lock interface, and a second display displays a second screen lock interface, where the first screen lock interface is different from the second screen lock interface. A second application sends a first message to a first application in response to receiving a second operation performed by the user on the second display. In response to the first message, the first application displays a first unlocked interface by using the first display, and indicates the electronic device to switch from the screen-locked state to an unlocked state. The first application sends a second message to the second application. In response to the second message, the second application displays a second unlocked interface by using the second display. The first display is locked by using the first application, and the second display is locked by using the second application. The first application and the second application are two independent applications. In this way, the first display and the second display may display two different screen lock interfaces. In addition, the first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

That "the first application displays a first unlocked interface by using the first display, and indicates the electronic device to switch from the screen-locked state to an unlocked state" may be understood as that after the first application displays the first unlocked interface by using the first display, the first application indicates the electronic device to switch from the screen-locked state to the unlocked state; or in response to the first message, the first application displays the first unlocked interface by using the first display, and in response to the first message, the first application indicates the electronic device to switch from the screen-locked state to the unlocked state. In other words, in response to the first message, the first application may perform two things at the same time. One thing is to display the first unlocked interface by using the first display, and the other thing is to indicate the electronic device to switch from the screen-locked state to the unlocked state. This may not be specifically limited in this embodiment of this application.

To resolve the foregoing technical problem, in some other embodiments, in response to receiving a first operation performed by a user on the electronic device, the electronic device determines that a status of the electronic device is a screen-locked state. In this case, a first display displays a first screen lock interface, and a second display displays a second screen lock interface, where the first screen lock interface is different from the second screen lock interface. The second display displays a second unlocked interface in response to receiving a second operation performed by the user on the second display. A second application indicates the electronic device to switch from the screen-locked state to an unlocked state, and sends a first message to a first application. In response to the first message, the first application displays a first unlocked interface by using the first display. The first display is locked by using the first application, and the second display is locked by using the second application. The first application and the second application are two independent applications. In this way, the first display and the second display may display two different screen lock interfaces. In addition, the first display and the second display may further have different interaction behaviors. The user may independently operate the second display to perform unlocking, that is, the user may perform an unlocking operation on the second display, so that real-time unlocking performance is high, and user experience is improved. When the user operates one screen for unlocking, a screen lock interface of another screen is not affected.

The electronic device may be a device having a plurality of displays. A form of the electronic device is not specifically limited in this embodiment of this application. For example, the electronic device may be a foldable device, or the electronic device may be a device in a common form.

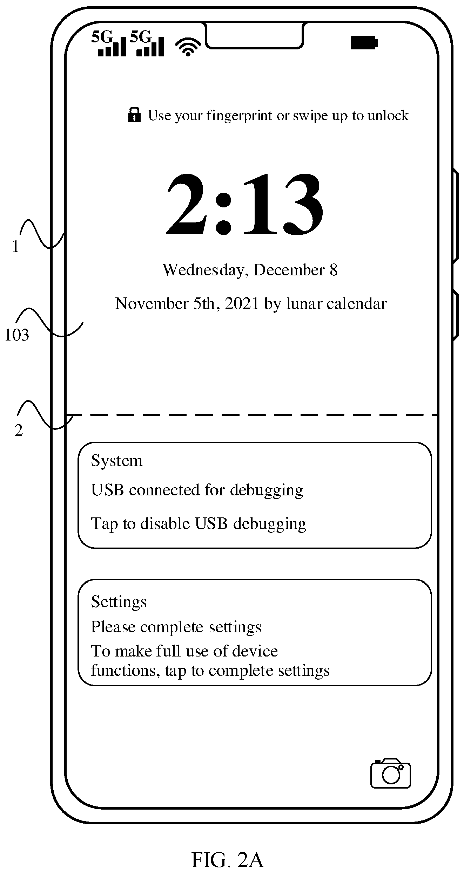

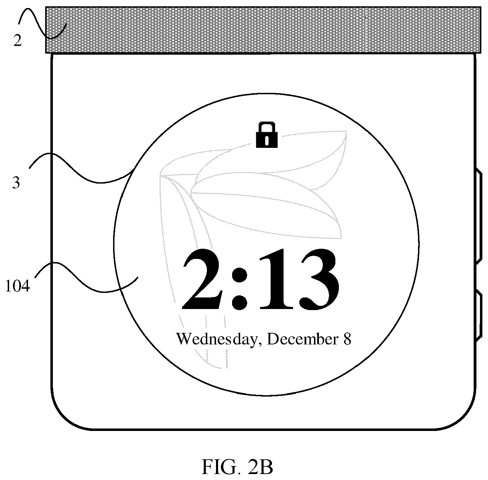

In some embodiments, the electronic device may include a foldable device. When the foldable device is in an unfolded state, the first display is unfolded on an expanded surface of the foldable device. When the foldable device is in a folded state, the second display is located on an outer surface of the foldable device. For example, the foldable device may be a foldable mobile phone. The first display is locked by using the first application, and the second display is locked by using the second application. The first application and the second application are two independent applications. In this way, the first display and the second display may display two different screen lock interfaces. FIG. 2A is a schematic diagram of a first screen lock interface of a first display 1 of a foldable mobile phone. FIG. 2B is a schematic diagram of a second screen lock interface of a second display 2 of the foldable mobile phone. As shown in FIG. 2A and FIG. 2B, a first screen lock interface 103 is different from a second screen lock interface 104. Certainly, the first screen lock interface and the second screen lock interface include but are not limited to the interfaces shown in FIG. 2A and FIG. 2B. This is not specifically limited in this embodiment of this application.

For example, the electronic device may be specifically a device like a mobile phone, a tablet computer, an in-vehicle device, a notebook computer, a smart screen, a wearable device (such as a smartwatch), an augmented reality (augmented reality, AR) / virtual reality (virtual reality, VR) device, an ultra-mobile personal computer (ultra-mobile personal computer, UMPC), a netbook, or a personal digital assistant (personal digital assistant, PDA). A device type of the electronic device is not limited in this embodiment of this application. An example electronic device includes but is not limited to Harmony^{®}, Android^{®}, Windows^{®}, or another operating system.

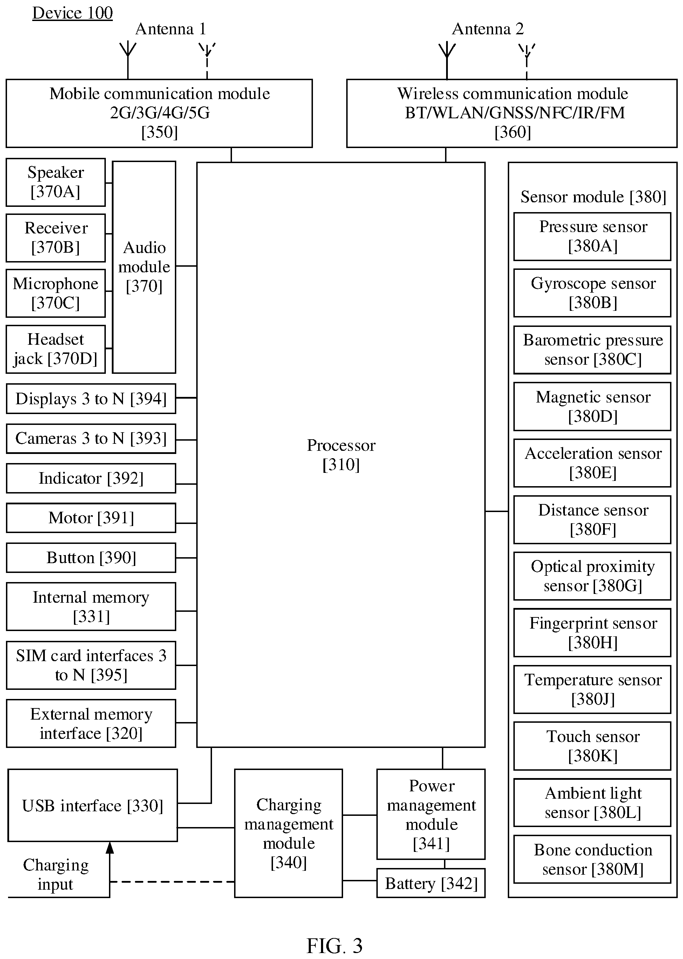

For example, FIG. 3 is a schematic diagram of a structure of an electronic device 100.

As shown in FIG. 3, the device 100 may include a processor 310, an external memory interface 320, an internal memory 331, a universal serial bus (universal serial bus, USB) interface 330, a charging management module 340, a power management module 341, a battery 342, an antenna 3, an antenna 2, a mobile communication module 350, a wireless communication module 360, an audio module 370, a loudspeaker 370A, a receiver 370B, a microphone 370C, a headset jack 370D, a sensor module 380, a button 390, a motor 393, an indicator 392, a camera 393, a display 394, a subscriber identification module (subscriber identification module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

It can be understood that the structure shown in this embodiment of the present invention does not constitute a specific limitation on the device 100. In some other embodiments of this application, the device 100 may include more or fewer components than those shown in the figure, or some components may be combined, or some components may be split, or different component arrangements may be used. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of the present invention is merely used as an example for description, and does not constitute a limitation on the structure of the device 100. In some other embodiments of this application, the device 100 may alternatively use an interface connection manner different from that in the foregoing embodiment, or use a combination of a plurality of interface connection manners.

The charging management module 340 is configured to receive charging input from a charger. The charger may be a wireless charger or a wired charger. In some embodiments of wired charging, the charging management module 340 may receive charging input of a wired charger through the USB interface 330. In some embodiments of wireless charging, the charging management module 340 may receive wireless charging input through a wireless charging coil of the device 100. When charging the battery 342, the charging management module 340 may alternatively supply power to the electronic device by using the power management module 341.

The power management module 341 is configured to connect the battery 342, the charging management module 340, and the processor 310. The power management module 341 receives input from the battery 342 and/or the charging management module 340, and supplies power to the processor 310, the internal memory 331, the display 394, the camera 393, the wireless communication module 360, and the like. The power management module 341 may further be configured to monitor parameters such as a battery capacity, a battery cycle count, and a battery health status (electric leakage or impedance). In some other embodiments, the power management module 341 may alternatively be disposed in the processor 310. In some other embodiments, the power management module 341 and the charging management module 340 may alternatively be disposed in a same component.

A wireless communication function of the device 100 may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that includes 2G/3G/4G/5G or the like and that is applied to the device 100. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some function modules in the mobile communication module 350 may be disposed in the processor 310. In some embodiments, at least some function modules in the mobile communication module 350 may be disposed in a same device as at least some modules in the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transfers the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the loudspeaker 370A, the receiver 370B, or the like), or displays an image or video by using the display 394. In some embodiments, the modem processor may be an independent device. In some other embodiments, the modem processor may be independent of the processor 310, and is disposed in a same device as the mobile communication module 350 or another function module.

The wireless communication module 360 may provide a solution that is applied to the device 100 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 360 may be one or more devices integrating at least one communication processor module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, the antenna 1 and the mobile communication module 350 in the device 100 are coupled, and the antenna 2 and the wireless communication module 360 in the device 100 are coupled, so that the device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The device 100 implements a display function by using the GPU, the display 394, the application processor, and the like. The GPU is a microprocessor for image processing, and is connected to the display 394 and the application processor. The GPU is configured to perform mathematical and geometric computation, and render an image. The processor 310 may include one or more GPUs that execute program instructions to generate or change display information.

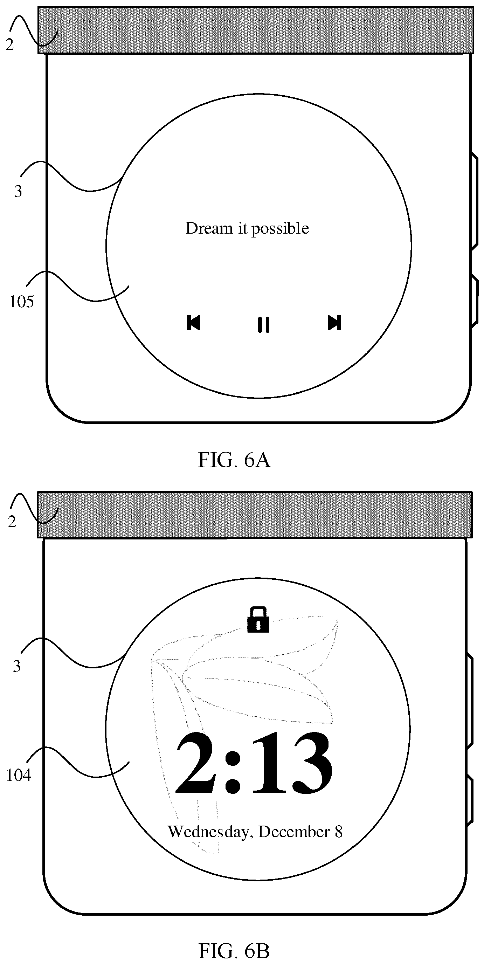

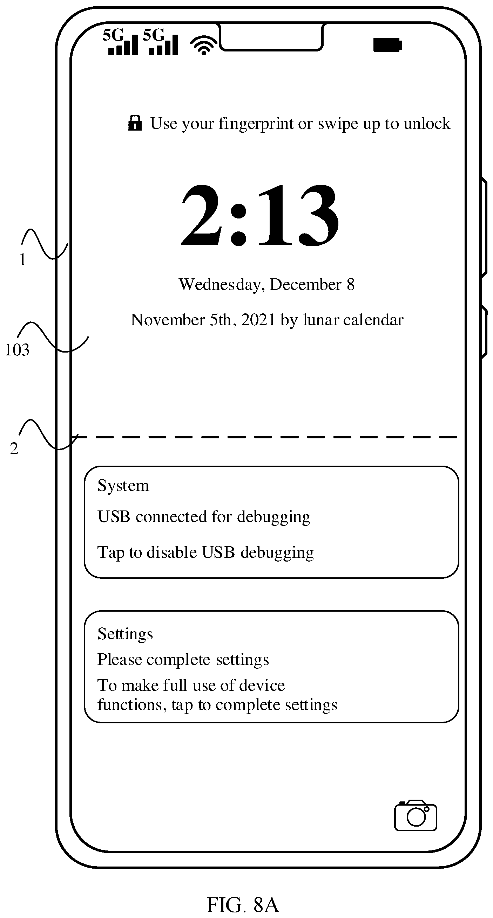

The display 394 is configured to display an image, a video, or the like. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the device 100 may include N displays 394, where N is a positive integer greater than 2. In some embodiments, the N displays 394 may include a first display and a second display. The first display displays interfaces shown in FIG. 8A to FIG. 8C. The second display displays interfaces shown in FIG. 6A to FIG. 7D and FIG. 8D to FIG. 9B.

The device 100 may implement an image shooting function through the ISP, the camera 393, the video codec, the GPU, the display 394, the application processor, and the like.

The ISP is configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 393.

The camera 393 is configured to capture a still image or a video. An optical image of an object is generated through a lens, and is projected to the photosensitive element. The photosensitive element may be a charge-coupled device (charge-coupled device, CCD) or a complementary metal-oxide-semiconductor (complementary metal-oxide-semiconductor, CMOS) optoelectronic transistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the device 100 may include one or N cameras 393, where N is a positive integer greater than 1.

The digital signal processor is configured to process a digital signal, and may process another digital signal in addition to the digital image signal. For example, when the device 100 selects a frequency, the digital signal processor is configured to perform Fourier transform and the like on frequency energy.

The video codec is configured to compress or decompress a digital video. The device 100 may support one or more video codecs. In this way, the device 100 can play or record videos in a plurality of encoding formats, for example, moving picture experts group (moving picture experts group, MPEG)1, MPEG2, MPEG3, and MPEG4.

The NPU is a neural-network (neural-network, NN) computing processor, and simulates a biological neural network structure such as a transmission mode between neurons in a human brain to perform rapid processing on input information, and can perform continuous self-learning. Applications such as intelligent cognition of the device 100 may be implemented through the NPU, for example, image recognition, facial recognition, speech recognition, and text understanding.

The external memory interface 320 may be used to connect to an external storage card, for example, a micro SD card, to extend a storage capability of the device 100. The external memory card communicates with the processor 310 through the external memory interface 320, to implement a data storage function. For example, a music file or a video file is stored in the external storage card.

The internal memory 331 may be configured to store computer-executable program code, and the executable program code includes instructions. The internal memory 331 may include a program storage area and a data storage area. The program storage area may store an operating system, an application required by at least one function (for example, a sound playing function or an image playing function), and the like. The data storage area may store data (such as audio data and a phone book) created during use of the device 100. In addition, the internal memory 331 may include a high-speed random access memory, and may further include a non-volatile memory, for example, at least one magnetic disk storage device, a flash storage device, or a universal flash storage (universal flash storage, UFS). The processor 310 runs instructions stored in the internal memory 331 and/or instructions stored in a memory disposed in the processor, to perform various function applications and data processing that are of the device 100.

The device 100 may implement an audio function by using the audio module 370, the loudspeaker 370A, the receiver 370B, the microphone 370C, the headset jack 370D, the application processor, and the like, for example, music playing, recording, and the like.

The audio module 370 is configured to convert digital audio information into analog audio signal output, and is further configured to convert analog audio input into a digital audio signal. The audio module 370 may be further configured to encode and decode an audio signal. In some embodiments, the audio module 370 may be disposed in the processor 310, or some function modules of the audio module 370 are disposed in the processor 310.

The loudspeaker 370A, also referred to as a "loud speaker", is configured to convert an audio electrical signal into a sound signal. The device 100 may be used to listen to music or answer a call in a hands-free mode over the loudspeaker 370A.

The receiver 370B, also referred to as an "earpiece", is configured to convert an audio electrical signal into a sound signal. When a call is answered or speech information is received by using the device 100, the receiver 370B may be put close to a human ear to receive a speech.

The microphone 370C, also referred to as a "mike" or a "mic", is configured to convert a sound signal into an electrical signal. When making a call or sending voice information, the user may make a sound near the microphone 370C through the mouth of the user, to enter a sound signal to the microphone 370C. At least one microphone 370C may be disposed in the device 100. In some other embodiments, two microphones 370C may be disposed in the device 100, to collect a sound signal and implement a noise reduction function. In some other embodiments, three, four, or more microphones 370C may alternatively be disposed in the electronic device 100, to collect a sound signal, implement noise reduction, and identify a sound source, so as to implement a directional recording function and the like.

The headset jack 370D is configured to connect to a wired headset. The headset jack 370D may be a USB interface 330, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 380A is configured to sense a pressure signal, and may convert the pressure signal into an electrical signal. In some embodiments, the pressure sensor 380A may be disposed on the display 394. There are a plurality of types of pressure sensors 380A such as a resistive pressure sensor, an inductive pressure sensor, and a capacitive pressure sensor. The capacitive pressure sensor may include at least two parallel plates made of conductive materials. When force is applied to the pressure sensor 380A, capacitance between electrodes changes. The device 100 determines strength of the pressure based on a change in the capacitance. When a touch operation is performed on the display 394, the device 100 detects strength of the touch operation based on the pressure sensor 380A. The device 100 may further calculate a touch position based on a detection signal of the pressure sensor 380A. In some embodiments, touch operations that are performed in a same touch position but have different touch operation strength may correspond to different operation instructions. For example, when a touch operation whose touch operation strength is less than a first pressure threshold is performed on an SMS message application icon, an instruction for viewing an SMS message is executed. When a touch operation whose touch operation strength is greater than or equal to the first pressure threshold is performed on the SMS message application icon, an instruction for creating a new SMS message is executed.

The gyroscope sensor 380B may be configured to determine a moving posture of the device 100. In some embodiments, an angular velocity of the device 100 around three axes (namely, axes x, y, and z) may be determined through the gyroscope sensor 380B. The gyroscope sensor 380B may be configured to implement image stabilization during image shooting. For example, when the shutter is pressed, the gyroscope sensor 380B detects an angle at which the device 100 jitters, calculates, based on the angle, a distance for which a lens module needs to compensate, and allows the lens to cancel the jitter of the device 100 through reverse motion, to implement image stabilization. The gyroscope sensor 380B may further be used in a navigation scenario and a motion-controlled gaming scenario.

The barometric pressure sensor 380C is configured to measure barometric pressure. In some embodiments, the device 100 calculates an altitude by using a barometric pressure value measured by the barometric pressure sensor 380C, to assist in positioning and navigation.

The magnetic sensor 380D includes a Hall effect sensor. The device 100 may detect opening and closing of a leather case by using the magnetic sensor 380D. In some embodiments, when the device 100 is a clamshell phone, the device 100 may detect opening and closing of a flip cover based on the magnetic sensor 380D. Further, a feature such as automatic unlocking of the flip cover is set based on a detected opening or closing state of the leather case or a detected opening or closing state of the flip cover.

The acceleration sensor 380E may detect magnitudes of accelerations of the device 100 in various directions (usually three axes). When the device 100 is static, a magnitude and a direction of gravity may be detected. The acceleration sensor 380E may be further configured to identify a posture of the electronic device, and is used in an application such as switching between a landscape mode and a portrait mode or a pedometer.

The distance sensor 380F is configured to measure a distance. The device 100 may measure the distance by using infrared or laser. In some embodiments, in an image shooting scenario, the device 100 may measure a distance by using the distance sensor 380F to implement fast focusing.

The optical proximity sensor 380G may include, for example, a light-emitting diode (LED) and an optical detector, for example, a photodiode. The light emitting diode may be an infrared light emitting diode. The device 100 transmits infrared light by using the light emitting diode. The device 100 detects infrared reflected light from a nearby object by using the photodiode. When plenty of reflected light is detected, it may be determined that there is an object near the device 100. When insufficient reflected light is detected, the device 100 may determine that there is no object near the device 100. The device 100 may detect, by using the optical proximity sensor 380G, whether the user holds the device 100 close to an ear to make a call, so as to automatically turn off the screen to save power. The optical proximity sensor 380G may further be used in a leather case mode or a pocket mode to automatically perform screen unlocking or locking.

The ambient light sensor 380L is configured to sense ambient light brightness. The device 100 may adaptively adjust brightness of the display 394 based on the sensed ambient light brightness. The ambient light sensor 380L may further be configured to automatically adjust white balance during photographing. The ambient light sensor 380L may further cooperate with the optical proximity sensor 380G to detect whether the device 100 is in a pocket, to avoid an unintentional touch.

The fingerprint sensor 380H is configured to collect a fingerprint. The device 100 may use a feature of the collected fingerprint to implement fingerprint-based unlocking, application lock access, fingerprint-based photographing, fingerprint-based call answering, and the like.

The temperature sensor 380J is configured to detect a temperature. In some embodiments, the device 100 executes a temperature processing policy by using the temperature detected by the temperature sensor 380J. For example, when the temperature reported by the temperature sensor 380J exceeds a threshold, the device 100 lowers performance of a processor located near the temperature sensor 380J, to reduce power consumption to implement thermal protection. In some other embodiments, when the temperature is lower than another threshold, the device 100 heats the battery 342 to avoid abnormal shutdown of the device 100 caused by a low temperature. In some other embodiments, when the temperature is lower than still another threshold, the device 100 boosts an output voltage of the battery 342, to avoid abnormal shutdown caused by a low temperature.

The touch sensor 380K is also referred to as a "touch device". The touch sensor 380K may be disposed on the display 394, and the touch sensor 380K and the display 394 form a touchscreen, which is also referred to as a "touchscreen". The touch sensor 380K is configured to detect a touch operation on or near the touch sensor 380K. The touch sensor may transfer the detected touch operation to the application processor to determine a type of the touch event. The display 394 may provide a visual output related to the touch operation. In some other embodiments, the touch sensor 380K may alternatively be disposed on a surface of the device 100, or disposed in a position different from the display 394.

The bone conduction sensor 380M may obtain a vibration signal. In some embodiments, the bone conduction sensor 380M may obtain a vibration signal of a vibration bone of a human vocal-cord part. The bone conduction sensor 380M may further be in contact with a human pulse, to receive a blood pressure beating signal. In some embodiments, the bone conduction sensor 380M may alternatively be disposed in the headset, to obtain a bone conduction headset. The audio module 370 may obtain a voice signal through parsing based on the vibration signal that is of the vibration bone of the vocal-cord part and that is obtained by the bone conduction sensor 380M, to implement a voice function. The application processor may parse heart rate information based on the blood pressure beating signal obtained by the bone conduction sensor 380M, to implement a heart rate detection function.

The button 390 includes a power-on button, a volume button, and the like. The button 390 may be a mechanical button. The button 390 may alternatively be a touch button. The device 100 may receive input from the button, and generate button signal input related to user settings and function control of the device 100.

The motor 391 may generate a vibration prompt. The motor 391 may be configured to provide an incoming call vibration prompt and touch vibration feedback. For example, touch operations performed on different applications (for example, photographing and audio playing) may correspond to different vibration feedback effects. For touch operations performed on different areas of the display 394, the motor 391 may also correspond to different vibration feedback effects. Different application scenarios (for example, a time reminder, information receiving, an alarm clock, and a game) may also correspond to different vibration feedback effects. The touch vibration feedback effect may be further customized.

In this embodiment of this application, there may be a plurality of displays 394. For example, the display 394 may include a first display and a second display. When the first display and the second display are in a screen-locked state, the first display displays a first screen lock interface by using a first application, and the second display displays a second screen lock interface by using a second application. The first application and the second application may be system applications of the electronic device. The internal memory 331 may store code of the first application and code of the second application. In some embodiments, when the user operates the second display, the second application sends a first message to the first application, where the first message indicates the first application not to display the screen lock interface. The processor 310 runs the code of the first application, so that the first application displays the first unlocked interface by using the first display. In this case, the processor 310 determines that a status of the electronic device is switched from the screen-locked state to an unlocked state. In addition, the first application sends a second message to the second application, where the second message indicates the second application not to display the screen lock interface. The processor 310 runs the code of the second application, so that the second application displays a second unlocked interface by using the second display. In some other embodiments, when the user operates the second display, the second display displays a second unlocked interface. In this case, the second application indicates the processor 310 to determine to switch a status of the electronic device to an unlocked state. The second application sends a first message to the first application, where the first message indicates the first application not to display the screen lock interface. In this case, the processor 310 runs the code of the first application, so that the first application displays the first unlocked interface by using the first display.

The indicator 392 may be an indicator light, and may be configured to indicate a charging status and a power change, or may be configured to indicate a message, a missed call, a notification, or the like.

Certainly, the device 100 may further include another function unit. This is not limited in this embodiment of this application.

It should be noted that the device 100 may be a desktop computer, a portable computer, a network server, a mobile phone, a tablet computer, a wireless terminal, an embedded device, a chip system, or a device having a similar structure in FIG. 3. In addition, the composition structure shown in FIG. 3 does not constitute a limitation on the communication apparatus. In addition to the components shown in FIG. 3, the communication apparatus may include more or fewer components than the components shown in the figure, or some components may be combined, or different component arrangements may be used.

In this embodiment of this application, the chip system may include a chip, or may include a chip and another discrete component.

It may be understood that a structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

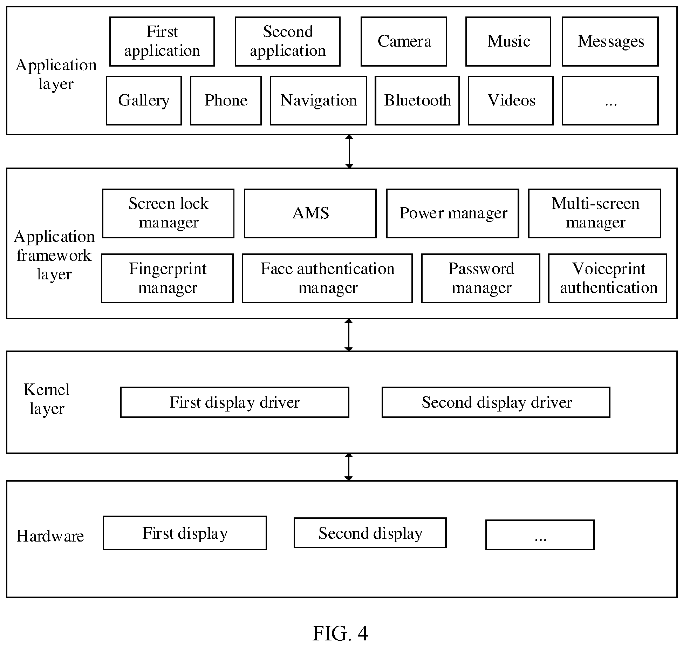

FIG. 4 is a block diagram of a software structure of an electronic device 100 according to an embodiment of the present invention.

In a layered architecture, software is divided into several layers, and each layer has a clear role and task. The layers communicate with each other through a software interface. In some embodiments, a software structure of the electronic device 100 may be divided into three layers: an application layer, an application framework layer, and a kernel layer from top to bottom.

The application layer may include a series of application packages.

As shown in FIG. 4, the application package may include applications such as first screen lock application (namely, a first application), second screen lock application (namely, a second application), Camera, Gallery, Calendar, Phone, Maps, Navigation, WLAN, Bluetooth, Music, Videos, and Messages.

The first screen lock application mainly provides interface display in a first display (or referred to as a primary screen) in a screen-locked state, an operation of unlocking the primary screen, change management of a system locked/unlocked state, and synchronous processing of locking/unlocking of a plurality of displays.

The second screen lock application is mainly responsible for content display in a second display (or referred to as a secondary screen) in a screen-locked state, an unlocking operation performed by a user on the screen, a prompt, and synchronization with a system state.

The application framework layer provides an application programming interface (application programming interface, API) and a programming framework for an application at the application layer. The application framework layer includes some predefined functions.

As shown in FIG. 4, the application framework layer may include a screen lock manager (Keyguard management service), an AMS, a power manager, a multi-screen manager, a fingerprint manager, a face authentication manager, a password manager, voiceprint authentication, and the like.

The screen lock manager is mainly responsible for synchronizing locked/unlocked states of a plurality of screens.

The kernel layer is a layer between hardware and software. The kernel layer includes at least a binder driver, a display driver for the first display, a display driver for the second display, a camera driver, an audio driver, a sensor driver, and the like.

The following describes an example of a working process of software and hardware of the electronic device 100 with reference to a screen lock scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a control of a first screen lock application icon. The first screen lock application invokes an interface of the application framework layer to start the first screen lock application, and then invokes the kernel layer to start the display driver for the first display. The first display reads a screen lock interface in a first screen container, and displays the screen lock interface.

An embodiment of this application provides a multi-screen unlocking method, and the method is applied to an electronic device. The electronic device may include a plurality of displays, and each display corresponds to one screen lock application. For example, the electronic device may include a first display and a second display. The first display corresponds to a first screen lock application (for example, the first application), and the second display corresponds to a second screen lock application (for example, the second application). In this embodiment of this application, an example in which the first display of the electronic device is a primary screen and the second display of the electronic device is a secondary screen is used for description. Further, as shown in FIG. 4, the electronic device may further include a screen lock manager. The second screen lock application registers a communication interface and a callback interface by using the screen lock manager. The communication interface is used for communication between the second screen lock application and the first screen lock application. The callback interface is used by the first screen lock application to invoke the second screen lock application.

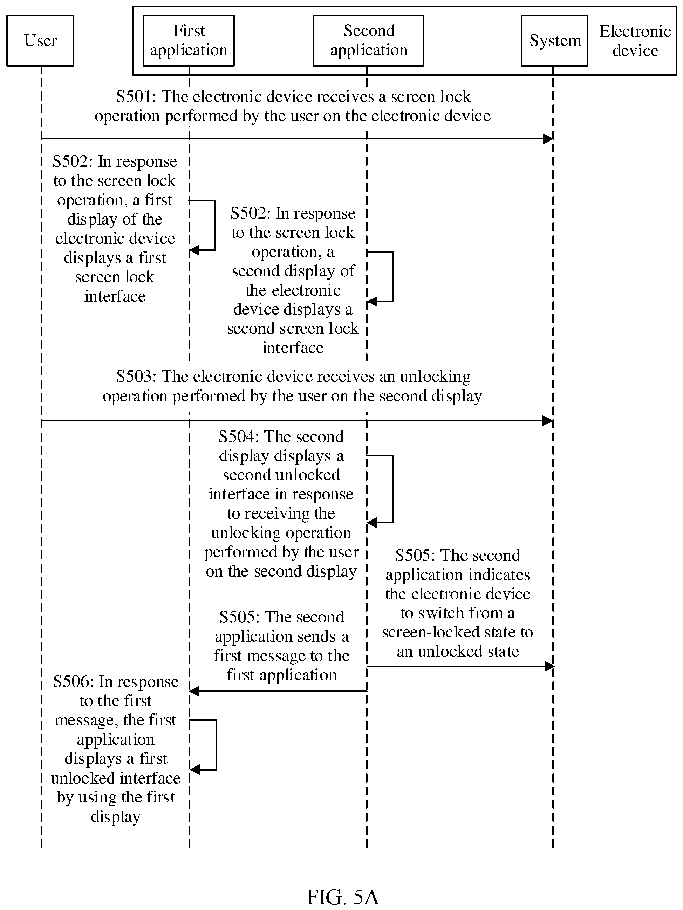

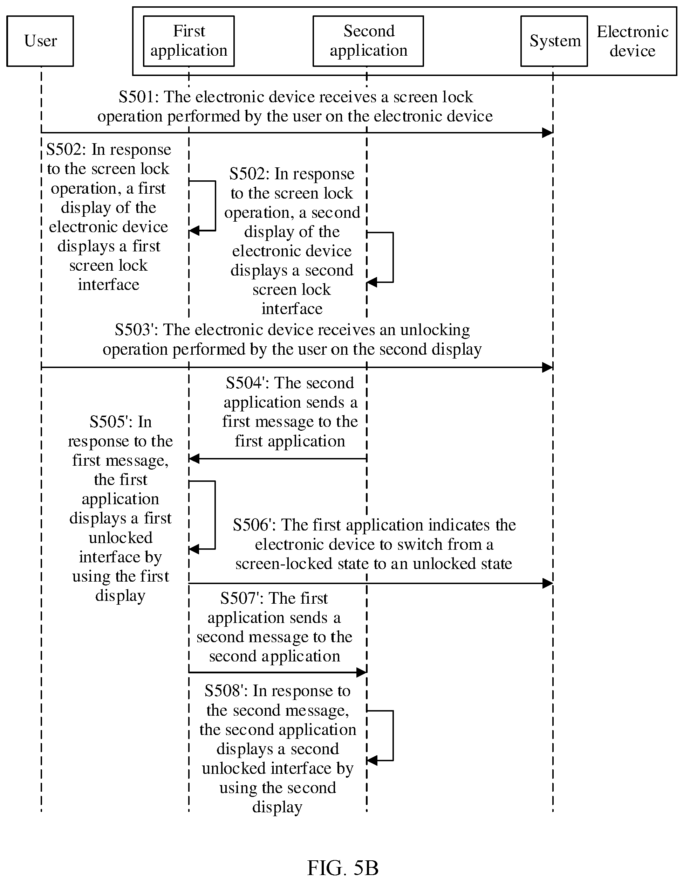

FIG. 5A is a schematic diagram of a procedure of a multi-screen unlocking method according to an embodiment of this application. FIG. 5B is a schematic diagram of a procedure of a multi-screen unlocking method according to an embodiment of this application.

Refer to FIG. 5A and FIG. 5B. A specific procedure of the multi-screen unlocking method provided in this embodiment of this application may be described in different phases. Details are as follows.

### Phase 1: Screen lock phase

S501: An electronic device receives a screen lock operation performed by a user on the electronic device.

The screen lock operation may include a screen-off operation, a gesture operation, and the like. The gesture operation may include a sliding operation, a pressing operation, a tapping operation, and the like. This may not be specifically limited in this embodiment of this application.

Certainly, the screen lock operation may further vary with different electronic devices. For example, the electronic device may be a foldable mobile phone, and correspondingly, the screen lock operation may include a folding operation. For example, the foldable mobile phone is folded. Alternatively, the electronic device may be a common mobile phone. Correspondingly, the screen lock operation may include inserting and removing an intelligent (subscriber identity module, SIM) card. Alternatively, the electronic device may be a tablet computer. Correspondingly, the screen lock operation may include tapping a Home button.

S502: In response to the screen lock operation, a first display of the electronic device displays a first screen lock interface, and a second display of the electronic device displays a second screen lock interface, where the second screen lock interface is different from the first screen lock interface.

In a specific implementation, in response to the first screen lock operation, a first screen lock application (for example, the first application) of the electronic device performs screen locking. In this case, the first display reads the first screen lock interface in a first screen container, and displays the first screen lock interface. The first screen lock application sends a broadcast message, where the broadcast message carries an identifier of the second screen lock application (for example, the second application) and screen lock indication information. The second screen lock application receives the broadcast message. In this case, the second display reads the second screen lock interface in a second screen container, and displays the second screen lock interface, where the second screen lock interface is different from the first screen lock interface.

Display content of the first display is different from display content of the second display. This may be specifically implemented as follows.

In a first manner, the electronic device may identify related specification information of the first display, for example, resolution and dots per inch (dots per inch, DPI). The electronic device may establish the first screen container for the first display based on the related specification information of the first display. The first screen container may store the first screen lock interface of the first screen lock application. Similarly, the electronic device may further identify related specification information of the second display. The electronic device may establish the second screen container for the second display based on the related specification information of the second display. The second screen container may store the second screen lock interface of the second screen lock application, and the second screen lock interface is different from the first screen lock interface. The first screen container and the second screen container may be distinguished by using different display identifiers (Display IDs).

In this way, the first display of the electronic device can read the first screen lock interface in the first screen container, and display the first screen lock interface. Similarly, the second display of the electronic device can read the second screen lock interface in the second screen container, and display the second screen lock interface. In this case, the first screen lock interface displayed by the first display is different from the second screen lock interface displayed by the second display.

In a second manner, compared with the first manner, the electronic device may convert information such as an application icon, an application interface, an SMS message received by the electronic device, a status bar, and a specified screen lock interface in the electronic device into the second screen lock interface that matches specification information of the second display, and store the second screen lock interface in the second screen container. Subsequently, the first display can read the first screen lock interface in the first screen container, and display the first screen lock interface. The second display can read the second screen lock interface in the second screen container, and the second screen lock interface is different from the first screen lock interface. In this way, two different screen lock interfaces can run independently in a same operating system.

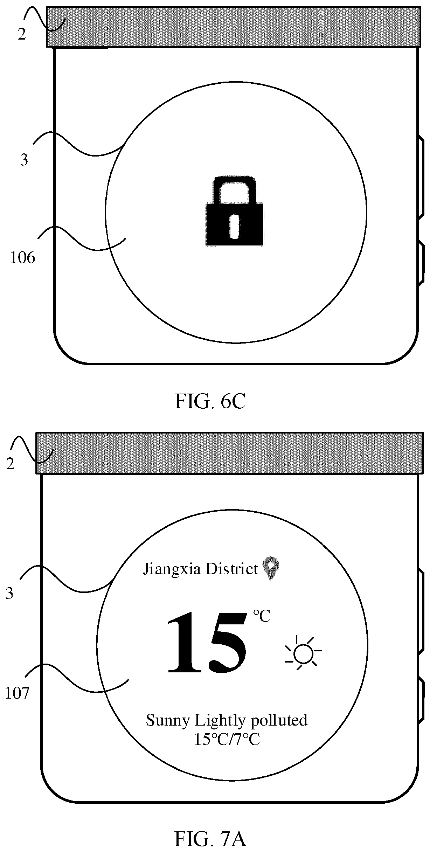

In a specific implementation, it is assumed that the electronic device is a foldable mobile phone. When the user uses the foldable mobile phone to play music and the foldable mobile phone is in an unfolded state, the user triggers a screen lock operation, for example, the user taps a screen-off button. In this case, the foldable mobile phone performs a screen lock operation, and the foldable mobile phone may display a screen lock interface 103 shown in FIG. 2A. When the user uses the foldable mobile phone to play music, and the foldable mobile phone is in a folded state, that is, when a secondary screen (the second display) of the foldable mobile phone displays an interface shown in FIG. 6A, the user triggers a screen lock operation. In this case, the foldable mobile phone performs the screen lock operation, and the foldable mobile phone may display a screen lock interface 104 shown in FIG. 6B. Certainly, the foldable mobile phone may display a screen lock interface 104 shown in FIG. 6C. It can be seen that a screen lock interface (namely, the first screen lock interface) of a primary screen is different from the screen lock interface (namely, the second screen lock interface) of the secondary screen.

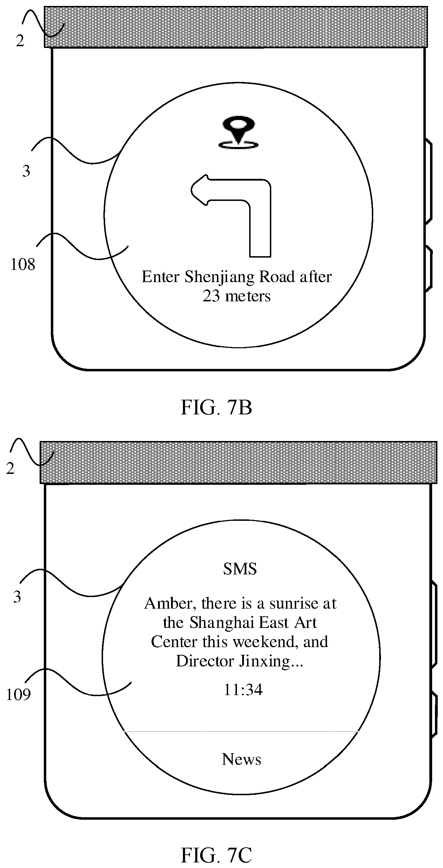

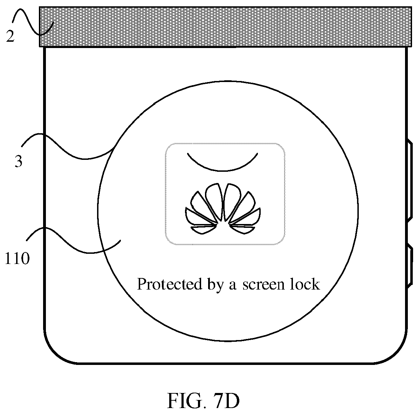

Certainly, the second screen lock interface may alternatively be displayed as a pull-down notification bar, a notification, a widget of a third application, or an application icon of the third application. For example, the second display may display a screen lock interface 107 shown in FIG. 7A. Information such as a position and a weather condition may be displayed in the screen lock interface 107. For example, the position is Jiangxia District, a current temperature is 15°C, a highest temperature today is 15°C, a lowest temperature today is 7°C, and weather is sunny. The second display may further display a screen lock interface 108 shown in FIG. 7B, and navigation information may be displayed in the screen lock interface 108, for example, an icon, a roadmap, and prompt information of a positioning application, where the prompt information may be "Enter Shenjiang Road after 23 meters". The second display may further display a screen lock interface 109 shown in FIG. 7C, and a notification may be displayed in the screen lock interface 109, for example, an SMS message, where the SMS message may be "Amber, there is a sunrise at the Shanghai East Art Center this weekend, and Director Jinxing...". The second display may further display a screen lock interface 110 shown in FIG. 7D, and the application icon of the third application may be displayed in the screen lock interface 110, for example, the application icon and prompt information of the third application, where the prompt information is "Protected by a screen lock", and the like. Certainly, the second display may further display other content. This is not listed one by one in this embodiment of this application.

In some embodiments, the multi-screen unlocking method provided in this embodiment of this application may further include: when a screen status of the second display is a screen-locked state, switching an interface of the second display from the second screen lock interface to an interface 1 (for example, the second interface) in response to receiving an operation 1 (for example, the third operation) of the user on the second display. The operation 1 may include a gesture operation, and the gesture operation may include a sliding operation. For example, the sliding operation may be an operation of sliding from one end of the first display towards the other end. The sliding operation may alternatively be a sliding operation with a specified track. This is not specifically limited in this embodiment of this application. The interface 1 may be a screen lock interface different from the second screen lock interface. For example, the second screen lock interface is the screen lock interface shown in FIG. 6B or FIG. 6C, and the interface 1 is the screen lock interface shown in FIG. 7A to FIG. 7D.

It should be noted herein that, in response to the screen lock operation, the electronic device may further determine that a status of the electronic device is a screen-locked state. This step is not mandatory. Therefore, this step may be briefly mentioned in this embodiment of this application.

### Phase 2: Unlocking phase.

Unlocking the electronic device may be implemented in the following manners.

In a first manner, the user operates the second display, and the second application performs unlocking. Details are shown in FIG. 5A.

S503: The electronic device receives an unlocking operation (for example, the second operation) performed by the user on the second display.

The unlocking operation may include a password unlocking operation, a face authentication unlocking operation, a fingerprint unlocking operation, and the like. Certainly, the unlocking operation may further include another unlocking operation, for example, a voiceprint unlocking operation. This is not specifically limited in this embodiment of this application.

S504: The second display displays a second unlocked interface in response to receiving the unlocking operation (for example, the second operation) performed by the user on the second display.

Specifically, the second application exits the second screen lock interface in response to the unlocking operation of the user. That is, the second display implements display of the second unlocked interface by using the second application.

S505: The second application indicates the electronic device to switch from the screen-locked state to an unlocked state, and sends a first message to the first application. Correspondingly, the first application receives the first message.

The first message indicates the first application not to display the screen lock interface. The first message may carry operation information of the user.

S506: In response to the first message, the first application displays a first unlocked interface by using the first display.

For example, the first display may be a primary screen (or referred to as a large screen), and the second display may be a secondary screen (or referred to as a small screen); or the first display may be a secondary screen, and the second display may be a primary screen. S503 to S506 are described in detail below, and may be specifically as follows.

### Manner 1: Password unlocking

S11: The second display displays an interface 2 in response to receiving an operation 2 performed by the user on the second display, where the interface 2 includes a password input area.

The operation 2 may include a gesture operation, and the gesture operation may include a sliding operation. For example, the sliding operation may be an operation of sliding from one end of the second display towards the other end. The sliding operation may alternatively be a sliding operation with a specified track. This is not specifically limited in this embodiment of this application.

The password input area may include a numeric keyboard or a gesture area.

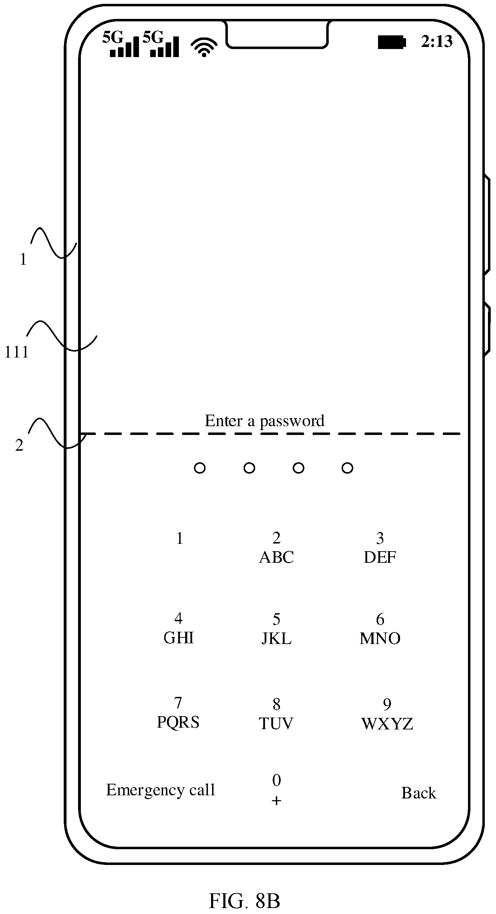

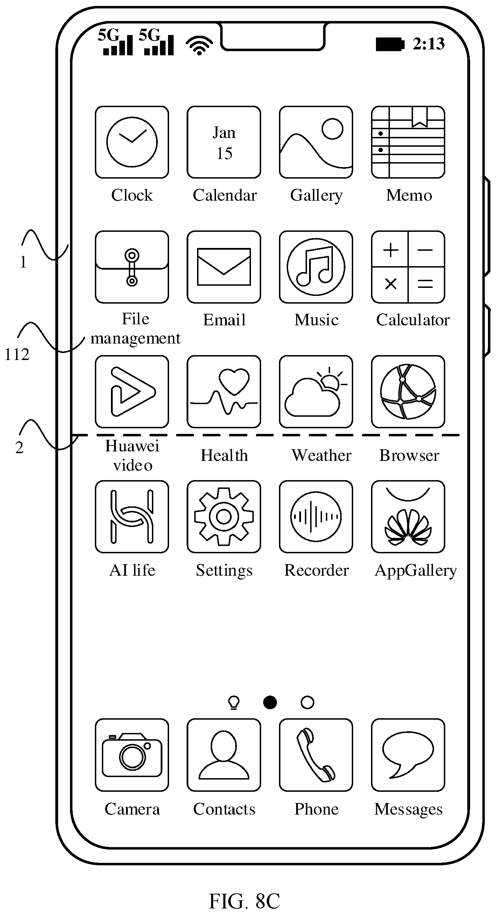

For example, the second display is the primary screen, and the user performs a sliding operation on a screen lock interface shown in FIG. 8A. A display interface of the electronic device jumps from an interface 103 shown in FIG. 8A to an interface 111 shown in FIG. 8B. A password input area is displayed in the interface 111. After the user enters a password, the interface of the electronic device may jump to an interface 112 shown in FIG. 8C. Certainly, if the electronic device plays a song before the screen is locked, after the user enters the password, the interface of the electronic device may jump to a playing interface of the song.

S12: In response to receiving the password entered by the user in the password input area, the second screen lock application corresponding to the second display sends the password to a password manager of the electronic device.

S13: The password manager receives the password, and performs verification on the password. After the verification on the password succeeds, the password manager generates verification success information, and sends the verification success information to the second screen lock application.

S14: The second display displays the second unlocked interface by using the second screen lock application, and the second screen lock application sends a message 1 to the first screen lock application corresponding to the first display, where the message 1 indicates the first screen lock application to perform screen unlocking.

The message 1 may be a broadcast message. For example, the broadcast message may be represented as android.intent.action.USER PRESENT.

That the second display displays the second unlocked interface by using the second screen lock application may be specifically implemented as follows: The second screen container can store the second screen lock interface of the second screen lock application. Therefore, the second screen lock application does not drive the second display to read the second screen lock interface in the second screen container; or the second screen lock application drives the second display to stop reading the second screen lock interface in the second screen container. Certainly, there may be another implementation. This is not specifically limited in this embodiment of this application.

S15: In response to the message 1, the first screen lock application displays the first unlocked interface by using the first display.

### Manner 2: Face authentication unlocking

S31: In response to receiving an operation 4 performed by the user on the second display, the second screen lock application sends a message 2 to a face authentication manager, where the message 2 carries face authentication indication information.

The operation 4 may be the same as the operation 1. For details, refer to the foregoing related descriptions. Details are not described in this embodiment of this application.

S32: The face authentication manager triggers, based on the message 2, the electronic device to capture a face image.

Specifically, the electronic device starts a camera (for example, a camera), and captures the face image of the user by using the camera.

S33: The face authentication manager performs authentication the face image captured by the electronic device.

Specifically, the face authentication manager compares the face image captured by the electronic device with a pre-stored face image of an authorized user.

S34: After the authentication on the face image succeeds, the face authentication manager generates authentication success information, and sends the authentication success information to the second screen lock application. In addition, the electronic device determines that the screen status is switched from the screen-locked state to the unlocked state.

S35: The second screen lock application sends a broadcast message to the first screen lock application, where the broadcast message carries the authentication success information and screen status update prompt information.

For example, the broadcast message may be represented as com.huawei.keyguard.action.KEYGUARD_AUTH_STATE. A parameter carried in the broadcast message includes an authentication result and a biometric authentication manner, for example, a fingerprint, a face, a bone voiceprint, and a smart device.

S36: The second screen lock application displays the second unlocked interface by using the second display.

After the second screen lock application successfully performs unlocking, the second screen lock application may send an unlocking broadcast. For example, the unlocking broadcast may be represented as android.intent.action. USER PRESENT.

S37: In response to the broadcast message, the first screen lock application displays the first unlocked interface by using the first display.

In a second manner, the user operates the second display, and the first application performs unlocking. Details are shown in FIG. 5B.

S503': The electronic device receives an unlocking operation (for example, the second operation) performed by the user on the second display.

S503' is the same as S503. For details, refer to the foregoing description. Details are not described herein again.

S504': The second application sends a first message to the first application in response to receiving the unlocking operation (for example, the second operation) performed by the user on the second display. Correspondingly, the first application receives the first message.

The first message indicates the first application not to display the screen lock interface. The first message may carry operation information of the user. For example, the following describes face authentication indication information triggered by the user in the second interface.

S505': In response to the first message, the first application displays a first unlocked interface by using the first display.

S506': The first application indicates the electronic device to switch from the screen-locked state to the unlocked state.

S507': The first application sends a second message to the second application. Correspondingly, the second application receives the second message.

The second message indicates the second application not to display the screen lock interface.

S508': In response to the second message, the second application displays a second unlocked interface by using the second display.

For example, the first display may be a primary screen (or referred to as a large screen), and the second display may be a secondary screen (or referred to as a small screen); or the first display may be a secondary screen, and the second display may be a primary screen. S503 to S506 and S503' to S508' are described in detail below, and may be specifically as follows.

### Manner 1: Password unlocking

S21: The second display displays an interface 3 (for example, the first interface) in response to receiving an operation 3 (for example, the second operation) performed by the user on the second display, where the first interface includes a password input area.

S22: In response to receiving an operation of entering a password in the password input area by the user, the second application sends a first message to the first application, where the first message indicates the first application not to display the screen lock interface, and the first message carries the password. The first application sends the first message to the password manager.

S23: The password manager performs verification on the password.

S24: After the verification on the password succeeds, the first application displays the first unlocked interface by using the first display.

S25: The first application sends a second message to the second application, where the second message indicates the second application not to display the screen lock interface. Correspondingly, the second application receives the second message.

S26: In response to the second message, the second application displays the second unlocked interface by using the second display.

In this embodiment of this application, related content of descriptions of S23 and S24 is the same as that of S13 to S15, and details are not described herein again.

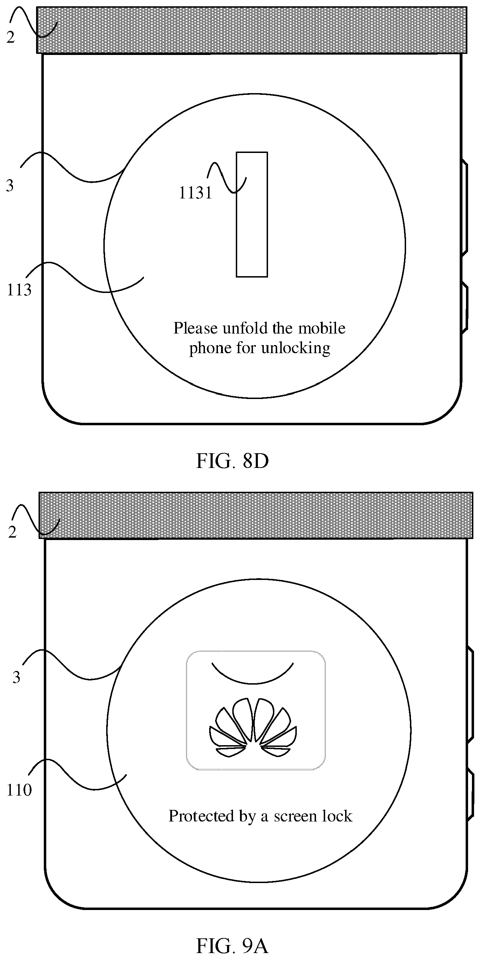

In a case, a size of the second display is small, and it is inconvenient for the user to enter the password on the second display. To resolve the foregoing problem, the multi-screen unlocking method provided in this embodiment of this application may further include: The second display displays first prompt information in response to receiving the second operation performed by the user on the second display, where the first prompt information is used to prompt the user to perform unlocking in a preset unlocking manner. For example, the electronic device is a foldable mobile phone. The second operation may be an operation performed by the user on the second display, for example, an operation of double-tapping the second screen lock interface of the second display. When the user double-taps the second screen lock interface, an interface of the foldable mobile phone is displayed as an interface 113 shown in FIG. 8D. In the interface 113, because the size of the second display is small and it is inconvenient to display a password input area, prompt information is displayed in the interface. For example, the prompt information may be "Please unfold the mobile phone for unlocking". Certainly, the prompt information may alternatively be "Use your fingerprint or swipe up to unlock". This is not specifically limited herein in this embodiment of this application.

### Manner 2: Face authentication unlocking

S41: The second application sends a message 3 (for example, the first message) to the first application in response to receiving an operation 5 (for example, the second operation) performed by the user on the second display, where the message 3 carries face authentication indication information.

For example, the message 3 may be a broadcast message, and the broadcast message may be represented as com.huawei.keyguard.action.KEYGUARD_ASSISTAN_SCREEN. A parameter carried in the broadcast message includes an indication for triggering facial recognition.

In some embodiments, the second display displays second prompt information in response to receiving the second operation performed by the user on the second display, where the second prompt information is used to inform the user that facial recognition is being performed.

A display form of the second prompt information may include a text, an image, or a breathing status icon.

S42: The first application sends the message 3 to the face authentication manager.

S43: The face authentication manager performs, based on the message 3, authentication on a face image captured by the electronic device.

S44: After the authentication on the face image succeeds, the face authentication manager generates authentication success information, and sends the authentication success information to the first screen lock application. In addition, the electronic device determines that the status of the electronic device is switched from the screen-locked state to the unlocked state.

S45: The first screen lock application sends a broadcast message to the second screen lock application, where the broadcast message carries the authentication success information and screen status update prompt information.

S46: The first screen lock application displays the first unlocked interface by using the first display.

S47: In response to the broadcast message, the second screen lock application displays the second unlocked interface by using the second display.

In this embodiment of this application, related content of descriptions of S43 to S47 is the same as that of S32 to S37, and details are not described herein again.

Certainly, in addition to the foregoing first and second manners, unlocking of the electronic device may be implemented in a third manner, which is specifically as follows.

### Manner 3: Fingerprint unlocking

The user performs fingerprint unlocking on the electronic device. Details are as follows.

S51: The electronic device collects fingerprint information of the user.

S52: A fingerprint manager of the electronic device compares the collected fingerprint information with pre-stored fingerprint information of an authorized user.

S53: After fingerprint authentication succeeds, the fingerprint manager generates fingerprint authentication success information, and sends the fingerprint authentication success information to the first screen lock application.

S54: The first screen lock application sends a broadcast message to the second screen lock application, where the broadcast message carries the fingerprint authentication success information and screen status update indication information.

S55: The first display displays the first unlocked interface by using the first screen lock application.

S56: The first screen lock application sends an unlocking broadcast to the second screen lock application, where the unlocking broadcast carries a screen unlocking indication.

S57: In response to the broadcast message, the second screen lock application displays the second unlocked interface by using the second display.

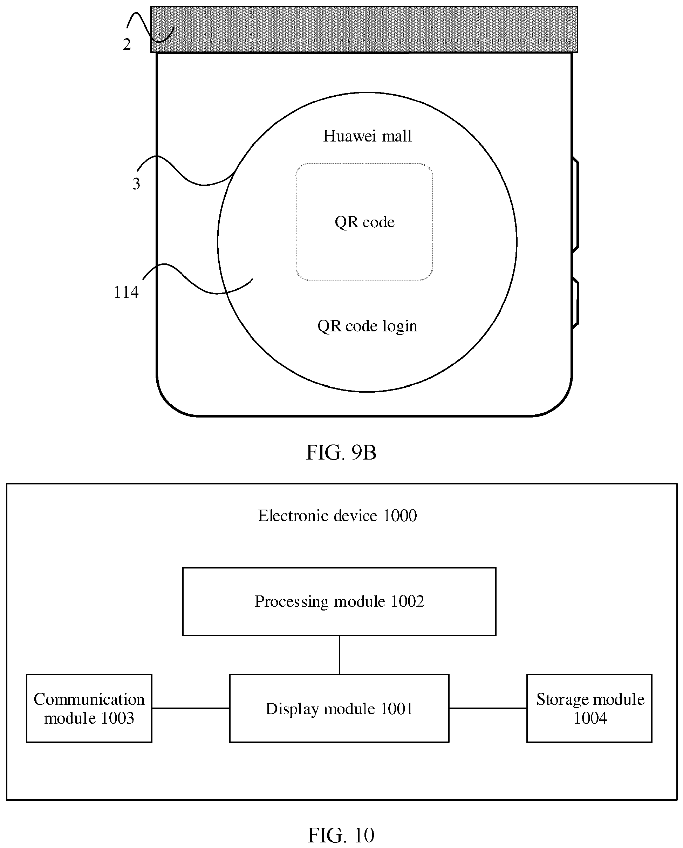

For example, the screen lock interface of the electronic device is displayed as an application icon. For example, the electronic device displays a screen lock interface shown in FIG. 9A. After the user enters a fingerprint in a fingerprint collection area of the electronic device, a display interface of the electronic device jumps from an interface 110 shown in FIG. 9A to an interface 114 shown in FIG. 9B. A login QR code of an application is displayed in the interface 114. The user may scan the login QR code by using the electronic device to log in to a corresponding application.

The foregoing uses an example in which the electronic device is a mobile phone for description. The multi-screen unlocking method provided in this embodiment of this application may be further applied to another electronic device, for example, a tablet or a head unit. Details are not described in this embodiment of this application.

It may be understood that, to implement the foregoing functions, the electronic device includes a corresponding hardware and/or software module for performing each function. With reference to algorithms and steps in examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In this embodiment, the electronic device may be divided into function modules based on the foregoing method examples. For example, each function module corresponding to each function may be obtained through division, or two or more functions may be integrated into one processing module. The integrated module may be implemented in a form of hardware. It should be noted that, in this embodiment, division into modules is an example and is merely logical function division. During actual implementation, there may be another division manner.

For example, in a division manner, with reference to FIG. 10, the electronic device 1000 may include a display module 1001, a processing module 1002, a communication module 1003, and a storage module 1004.

The display module 1001 may be configured to support the electronic device 1000 in displaying a user interface. For example, the display module 1001 may be configured to support the electronic device 1000 in performing S502 and S506 in the procedure shown in FIG. 5A, S505' and S508' in the procedure shown in FIG. 5B, and/or another process of the technology described in this specification.

The processing module 1002 may be configured to: control and manage an action of the electronic device 1000. For example, the processing module 1002 may be configured to support the electronic device 1000 in performing S501, S503, S504, and S505 in the procedure shown in FIG. 5A, S503', S504', S505', S506', S507', and the like in the procedure shown in FIG. 5B, and/or another process of the technology described in this specification.

The communication module 1003 may be configured to support communication between the electronic device 1000 and another device. For example, the communication module 1003 may be configured to support the electronic device 1000 in performing S504 in the procedure shown in FIG. 5A, S504' and S506' in the procedure shown in FIG. 5B, and/or another process of the technology described in this specification.

The storage module 1004 may be configured to store instructions and data, for example, store code of a first application, store an OpenID obtained by the electronic device 1000 by using a communication module, and store information such as a user account entered by a user.

The display module 1001 may be a display, for example, may be specifically a display 394 in the hardware structure shown in FIG. 3. The processing module 1002 may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. For example, the processing module 1002 may be specifically the processor 310 in the hardware structure shown in FIG. 3. The communication module 1003 may be a device, for example, a radio frequency circuit, a Bluetooth chip, or a Wi-Fi chip, that interacts with another electronic device. For example, the communication module 1003 may include the mobile communication module 350, the wireless communication module 360, the antenna 1, the antenna 2, or the like in the hardware structure shown in FIG. 3. The storage module 1004 may be a memory, for example, may be specifically the internal memory 331 in the hardware structure shown in FIG. 3.

It should be noted that all related content of the steps in the foregoing method embodiments may be cited in function description of corresponding function modules. Details are not described herein again.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the multi-screen unlocking method in the foregoing embodiment.

This embodiment of this application further provides a computer storage medium. The computer storage medium stores computer instructions. When the computer instructions are run on an electronic device, the electronic device is enabled to perform the multi-screen unlocking method in the foregoing embodiments.

An embodiment of this application further provides a computer program product. When the computer program product runs on a computer, the computer performs the foregoing related steps, so as to implement the multi-screen unlocking method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the multi-screen unlocking method performed by the electronic device in the foregoing method embodiments.

An embodiment of this application further provides a chip system. The chip system is applied to an electronic device, and the chip system includes one or more interface circuits and one or more processors. The interface circuit and the processor are interconnected through a line. The interface circuit is configured to: receive a signal from a memory of the electronic device, and send a signal to the processor, where the signal includes computer instructions stored in the memory. When the processor executes the computer instructions, the electronic device is enabled to perform the multi-screen unlocking method provided in the foregoing method embodiments.

The electronic device, the computer storage medium, the computer program product, or the chip provided in embodiments may be configured to perform the corresponding method provided above. Therefore, for beneficial effects that can be achieved, refer to the beneficial effects of the corresponding method provided above. Details are not described herein again.

Another embodiment of this application provides a system. Devices in the system may be configured to implement the multi-screen unlocking method in the foregoing method embodiments.

Based on the foregoing descriptions of the implementations, a person skilled in the art may understand that for the purpose of convenient and brief description, division into the foregoing function modules is merely used as an example for illustration. During actual application, the foregoing functions can be allocated to different function modules for implementation based on a requirement, that is, an inner structure of an apparatus is divided into different function modules to implement all or a part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-screen unlocking method, applied to a single electronic device (100) having a first display (1) and a second display (2), the first display corresponding to a first application, the second display corresponding to a second application, and the method comprises:
in response to receiving (S501) a first operation performed by a user on the electronic device, determining, by the electronic device, that a status of the electronic device is a screen-locked state;
displaying (S502), by the first display, a first screen lock interface (103) by using the first application, and displaying, by the second display, a second screen lock interface (104) by using the second application, wherein the first screen lock interface is different from the second screen lock interface;
sending (S504'), by the second application, a first message to the first application in response to receiving (S503') a second operation performed by the user on the second display;
in response to the first message, displaying (S505'), by the first application, a first unlocked interface by using the first display, and indicating the electronic device to switch from the screen-locked state to an unlocked state;
sending (S507'), by the first application, a second message to the second application; and
in response to the second message, displaying (S508'), by the second application, a second unlocked interface by using the second display.

2. The method according to claim 1, wherein the electronic device (100) further comprises a password manager, and the sending (S504'), by the second application, a first message to the first application in response to receiving a second operation performed by the user on the second display (2) comprises:
displaying, by the second display, a first interface in response to receiving the second operation performed by the user on the second display, wherein the first interface comprises a password input area; and
in response to receiving an operation of entering a password in the password input area by the user, sending, by the second application, the first message to the first application, wherein the first message carries the password; and
the first application is used to send the password to the password manager, and the password manager performs verification on the password; and after the verification on the password succeeds, the first application displays the first unlocked interface by using the first display (1).

3. The method according to claim 1, further comprising:
displaying, by the second display (2), first prompt information in response to receiving the second operation performed by the user on the second display, wherein the first prompt information is used to prompt the user to perform unlocking in a preset unlocking manner.

4. The method according to claim 1, wherein the electronic device (100) further comprises a face authentication manager, and the first message carries face authentication indication information; and
the first application is further used to send the first message to the face authentication manager, and the face authentication manager performs, based on the first message, authentication on a face image captured by the electronic device; and after the authentication on the face image succeeds, the first application displays the first unlocked interface by using the first display (1).

5. The method according to claim 4, further comprising:
displaying, by the second display (2), second prompt information in response to receiving the second operation performed by the user on the second display, wherein the second prompt information is used to inform the user that facial recognition is being performed.

6. The method according to claim 5, wherein a display form of the second prompt information comprises a text, an image, or a breathing status icon.

7. The method according to any one of claims 1 to 6, further comprising:
when a screen status of the second display (2) is a screen-locked state, switching an interface of the second display from the second screen lock interface (104) to a second interface in response to receiving a third operation performed by the user on the second display, wherein the second interface is used to display a pull-down notification bar, a notification, a widget of a third application, or an application icon of the third application.

8. The method according to any one of claims 1 to 7, wherein the first screen lock interface (103) comprises time, a date, and a lock icon; and the second screen lock interface (104) comprises at least one of the following: an application icon, a notification message, a weather condition, navigation information, and unlocking prompt information.

9. A multi-screen unlocking method, applied to a single electronic device (100) having a first display (1) and a second display (2), the first display corresponding to a first application, the second display corresponding to a second application, and the method comprises:
in response to receiving (S501) a first operation performed by a user on the electronic device, determining, by the electronic device, that a status of the electronic device is a screen-locked state;
displaying (S502), by the first display, a first screen lock interface (103) by using the first application, and displaying, by the second display, a second screen lock interface (104) by using the second application, wherein the first screen lock interface is different from the second screen lock interface;
displaying (S504), by the second display, a second unlocked interface in response to receiving a second operation performed by the user on the second display;
indicating (S505), by the second application, the electronic device to switch from the screen-locked state to an unlocked state, and sending, by the second application, a first message to the first application; and
in response to the first message, displaying (S506), by the first application, a first unlocked interface by using the first display.

10. The method according to claim 9, wherein the electronic device (100) further comprises a password manager, and the displaying (S504), by the second display (2), a second unlocked interface in response to receiving a second operation performed by the user on the second display comprises:
displaying, by the second display, a first interface in response to receiving the second operation performed by the user on the second display, wherein the first interface comprises a password input area;
in response to receiving an operation of entering a password in the password input area by the user, sending, by the second application, the password to the password manager by using the first application;
performing, by the password manager, verification on the password; and
after the verification on the password succeeds, displaying, by the second display, the second unlocked interface.

11. The method according to claim 9, wherein the electronic device (100) further comprises a password manager, and the displaying (S504), by the second display, a second unlocked interface in response to receiving a second operation performed by the user on the second display (2) comprises:
displaying, by the second display, first prompt information in response to receiving the second operation performed by the user on the second display, wherein the first prompt information is used to prompt the user to perform unlocking in a preset unlocking manner.

12. The method according to claim 9, wherein the electronic device (100) further comprises a face authentication manager, and the displaying (S504), by the second display (2), a second unlocked interface in response to receiving a second operation performed by the user on the second display comprises:
sending, by the second application, a second message to the first application in response to receiving the second operation performed by the user on the second display, wherein the second message carries face authentication indication information;
sending, by the first application, the second message to the face authentication manager;
performing, by the face authentication manager based on the second message, authentication on a face image captured by the electronic device; and
after the authentication on the face image succeeds, displaying, by the second display, the second unlocked interface.

13. The method according to claim 12, further comprising:
displaying, by the second display (2), second prompt information in response to receiving the second operation performed by the user on the second display, wherein the second prompt information is used to inform the user that facial recognition is being performed.

14. The method according to claim 13, wherein a display form of the second prompt information comprises a text, an image, or a breathing status icon.

15. A single electronic device (100) having a first display (1) and a second display (2), comprising one or more processors (310) and a memory (331), wherein the memory stores code; and when the code is executed by the one or more processors, the single electronic device performs the multi-screen unlocking method according to any one of claims 1 to

## Patentansprüche

1. Verfahren zum Entsperren mehrerer Bildschirme, das auf eine einzelne elektronische Vorrichtung (100), die ein erstes Display (1) und ein zweites Display (2) aufweist, angewendet wird, wobei das erste Display einer ersten Anwendung entspricht und das zweite Display einer zweiten Anwendung entspricht, wobei das Verfahren Folgendes umfasst:
als Reaktion auf das Empfangen (S501) einer ersten Operation, die durch einen Benutzer an der elektronischen Vorrichtung durchgeführt wird, Bestimmen durch die elektronische Vorrichtung, dass ein Status der elektronischen Vorrichtung ein gesperrter Bildschirmzustand ist;
Anzeigen (S502) einer ersten Bildschirmsperrschnittstelle (103) durch das erste Display unter Verwendung der ersten Anwendung und Anzeigen einer zweiten Bildschirmsperrschnittstelle (104) durch das zweite Display unter Verwendung der zweiten Anwendung, wobei sich die erste Bildschirmsperrschnittstelle von der zweiten Bildschirmsperrschnittstelle unterscheidet;
Senden (S504') einer ersten Nachricht durch die zweite Anwendung an die erste Anwendung als Reaktion auf das Empfangen (S503') einer zweiten Operation, die durch den Benutzer an dem zweiten Display durchgeführt wird;
als Reaktion auf die erste Nachricht, Anzeigen (S505') einer ersten entsperrten Schnittstelle durch die erste Anwendung unter Verwendung des ersten Displays und Anweisen der elektronischen Vorrichtung, von dem gesperrten Bildschirmzustand in einen entsperrten Zustand umzuschalten;
Senden (S507') einer zweiten Nachricht durch die erste Anwendung an die zweite Anwendung; und
als Reaktion auf die zweite Nachricht, Anzeigen (S508') einer zweiten, entsperrten Schnittstelle durch die zweite Anwendung unter Verwendung des zweiten Displays.

2. Verfahren nach Anspruch 1, wobei die elektronische Vorrichtung (100) ferner einen Passwort-Manager umfasst, und das Senden (S504') einer ersten Nachricht durch die zweite Anwendung an die erste Anwendung als Reaktion auf das Empfangen einer zweiten Operation, die durch den Benutzer an dem zweiten Display (2) durchgeführt wird, Folgendes umfasst:
Anzeigen einer ersten Schnittstelle durch das zweite Display als Reaktion auf das Empfangen der zweiten Operation, die durch den Benutzer an dem zweiten Display durchgeführt wird, wobei die erste Schnittstelle einen Passworteingabebereich umfasst; und
als Reaktion auf das Empfangen einer Operation zum Eingeben eines Passworts durch den Benutzer in den Passworteingabebereich, Senden der ersten Nachricht durch die zweite Anwendung an die erste Anwendung, wobei die erste Nachricht das Passwort enthält; und
die erste Anwendung verwendet wird, um das Passwort an den Passwort-Manager zu senden, und der Passwort-Manager eine Überprüfung des Passworts durchführt; und nachdem die Überprüfung des Passworts erfolgreich war, die erste Anwendung die erste entsperrte Schnittstelle unter Verwendung des ersten Displays (1) anzeigt.

3. Verfahren nach Anspruch 1, ferner umfassend:
Anzeigen erster Aufforderungsinformationen durch das zweite Display (2) als Reaktion auf das Empfangen der zweiten Operation, die durch den Benutzer an dem zweiten Display durchgeführt wird, wobei die ersten Aufforderungsinformationen verwendet werden, um den Benutzer aufzufordern, das Entsperren in einer voreingestellten Entsperrungsweise durchzuführen.

4. Verfahren nach Anspruch 1, wobei die elektronische Vorrichtung (100) ferner einen Gesichtsauthentifizierungsmanager umfasst und die erste Nachricht Informationen zur Anzeige der Gesichtsauthentifizierung enthält; und
die erste Anwendung ferner verwendet wird, um die erste Nachricht an den Gesichtsauthentifizierungsmanager zu senden, und der Gesichtsauthentifizierungsmanager basierend auf der ersten Nachricht eine Authentifizierung an einem durch die elektronische Vorrichtung erfassten Gesichtsbild durchführt; und nachdem die Authentifizierung an dem Gesichtsbild erfolgreich war, die erste Anwendung die erste entsperrte Schnittstelle unter Verwendung des ersten Displays (1) anzeigt.

5. Verfahren nach Anspruch 4, ferner umfassend:
Anzeigen zweiter Aufforderungsinformationen durch das zweite Display (2) als Reaktion auf das Empfangen der zweiten Operation, die durch den Benutzer an dem zweiten Display durchgeführt wird, wobei die zweiten Aufforderungsinformationen verwendet werden, um den Benutzer darüber zu informieren, dass die Gesichtserkennung durchgeführt wird.

6. Verfahren nach Anspruch 5, wobei eine Displayform der zweiten Aufforderungsinformationen einen Text, ein Bild oder ein Atemstatussymbol umfasst.

7. Verfahren nach einem der Ansprüche 1 bis 6, ferner umfassend: wenn ein Bildschirmstatus des zweiten Displays (2) ein gesperrter Bildschirmzustand ist, Umschalten einer Schnittstelle des zweiten Displays von der zweiten Bildschirmsperrschnittstelle (104) zu einer zweiten Schnittstelle als Reaktion auf das Empfangen einer dritten Operation, die durch den Benutzer an dem zweiten Display durchgeführt wird, wobei die zweite Schnittstelle verwendet wird, um eine herunterziehbare Benachrichtigungsleiste, eine Benachrichtigung, ein Widget einer dritten Anwendung oder ein Anwendungssymbol der dritten Anwendung anzuzeigen.

8. Verfahren nach einem der Ansprüche 1 bis 7, wobei die erste Bildschirmsperrschnittstelle (103) die Uhrzeit, ein Datum und ein Sperrsymbol umfasst; und die zweite Bildschirmsperrschnittstelle (104) mindestens eines der folgenden Elemente umfasst: ein Anwendungssymbol, eine Benachrichtigungsnachricht, eine Wetterbedingung, Navigationsinformationen und Informationen zur Aufforderung zum Entsperren.

9. Verfahren zum Entsperren mehrerer Bildschirme, das auf eine einzelne elektronische Vorrichtung (100), die ein erstes Display (1) und ein zweites Display (2) aufweist, angewendet wird, wobei das erste Display einer ersten Anwendung entspricht und das zweite Display einer zweiten Anwendung entspricht, wobei das Verfahren Folgendes umfasst:
als Reaktion auf das Empfangen (S501) einer ersten Operation, die durch einen Benutzer an der elektronischen Vorrichtung durchgeführt wird, Bestimmen durch die elektronische Vorrichtung, dass ein Status der elektronischen Vorrichtung ein gesperrter Bildschirmzustand ist;
Anzeigen (S502) einer ersten Bildschirmsperrschnittstelle (103) durch das erste Display unter Verwendung der ersten Anwendung und Anzeigen einer zweiten Bildschirmsperrschnittstelle (104) durch das zweite Display unter Verwendung der zweiten Anwendung, wobei sich die erste Bildschirmsperrschnittstelle von der zweiten Bildschirmsperrschnittstelle unterscheidet;
Anzeigen (S504) einer zweiten entsperrten Schnittstelle durch das zweite Display als Reaktion auf das Empfangen einer zweiten Operation, die durch den Benutzer an dem zweiten Display durchgeführt wird;
Anweisen (S505) der elektronischen Vorrichtung durch die zweite Anwendung, von dem gesperrten Bildschirmzustand in einen entsperrten Zustand umzuschalten, und Senden einer ersten Nachricht durch die zweite Anwendung an die erste Anwendung; und
als Reaktion auf die erste Nachricht, Anzeigen (S506) einer ersten entsperrten Schnittstelle durch die erste Anwendung unter Verwendung des ersten Displays.

10. Verfahren nach Anspruch 9, wobei die elektronische Vorrichtung (100) ferner einen Passwort-Manager umfasst, und das Anzeigen (S504) einer zweiten entsperrten Schnittstelle durch das zweite Display (2) als Reaktion auf das Empfangen einer zweiten Operation, die durch den Benutzer an dem zweiten Display durchgeführt wird, Folgendes umfasst:
Anzeigen einer ersten Schnittstelle durch das zweite Display als Reaktion auf das Empfangen der zweiten Operation, die durch den Benutzer an dem zweiten Display durchgeführt wird, wobei die erste Schnittstelle einen Passworteingabebereich umfasst;
als Reaktion auf das Empfangen einer Operation zum Eingeben eines Passworts in den Passworteingabebereich durch den Benutzer, Senden des Passworts durch die zweite Anwendung unter Verwendung der ersten Anwendung an den Passwort-Manager;
Durchführen einer Überprüfung des Passworts durch den Passwort-Manager; und
nach erfolgreicher Überprüfung des Passworts, Anzeigen der zweiten entsperrten Schnittstelle durch das zweite Display.

11. Verfahren nach Anspruch 9, wobei die elektronische Vorrichtung (100) ferner einen Passwort-Manager umfasst, und das Anzeigen (S504) einer zweiten entsperrten Schnittstelle durch das zweite Display als Reaktion auf das Empfangen einer zweiten Operation, die durch den Benutzer an dem zweiten Display (2) durchgeführt wird, Folgendes umfasst:
Anzeigen erster Aufforderungsinformationen durch das zweite Display als Reaktion auf das Empfangen der zweiten Operation, die durch den Benutzer an dem zweiten Display durchgeführt wird, wobei die ersten Aufforderungsinformationen verwendet werden, um den Benutzer aufzufordern, das Entsperren in einer voreingestellten Entsperrungsweise durchzuführen.

12. Verfahren nach Anspruch 9, wobei die elektronische Vorrichtung (100) ferner einen Gesichtsauthentifizierungsmanager umfasst, und das Anzeigen (S504) einer zweiten entsperrten Schnittstelle durch das zweite Display (2) als Reaktion auf das Empfangen einer zweiten Operation, die durch den Benutzer an dem zweiten Display durchgeführt wird, Folgendes umfasst:
Senden einer zweiten Nachricht durch die zweite Anwendung an die erste Anwendung als Reaktion auf das Empfangen der zweiten Operation, die durch den Benutzer an dem zweiten Display durchgeführt wird, wobei die zweite Nachricht Informationen zur Anzeige der Gesichtsauthentifizierung enthält;
Senden der zweiten Nachricht durch die erste Anwendung an den Gesichtsauthentifizierungsmanager;
Durchführen einer Authentifizierung an einem durch die elektronische Vorrichtung erfassten Gesichtsbild durch den Gesichtsauthentifizierungsmanager basierend auf der zweiten Nachricht; und
nach erfolgreicher Authentifizierung des Gesichtsbildes, Anzeigen der zweiten entsperrten Schnittstelle durch das zweite Display.

13. Verfahren nach Anspruch 12, ferner umfassend:
Anzeigen zweiter Aufforderungsinformationen durch das zweite Display (2) als Reaktion auf das Empfangen der zweiten Operation, die durch den Benutzer an dem zweiten Display durchgeführt wird, wobei die zweiten Aufforderungsinformationen verwendet werden, um den Benutzer darüber zu informieren, dass die Gesichtserkennung durchgeführt wird.

14. Verfahren nach Anspruch 13, wobei eine Displayform der zweiten Aufforderungsinformationen einen Text, ein Bild oder ein Atemstatussymbol umfasst.

15. Einzelne elektronische Vorrichtung (100), die ein erstes Display (1) und ein zweites Display (2) aufweist, umfassend einen oder mehrere Prozessoren (310) und einen Speicher (331), wobei der Speicher einen Code speichert; und, wenn der Code durch den einen oder die mehreren Prozessoren ausgeführt wird, die einzelne elektronische Vorrichtung das Verfahren zum Entsperren mehrerer Bildschirme nach einem der Ansprüche 1 bis 14 durchführt.

## Revendications

1. Procédé de déverrouillage multi-écran, appliqué à un dispositif électronique (100) unique ayant un premier affichage (1) et un second affichage (2), le premier affichage correspondant à une première application, le second affichage correspondant à une deuxième application, et le procédé comprend :
en réponse à la réception (S501) d'une première opération réalisée par un utilisateur sur le dispositif électronique, la détermination, par le dispositif électronique, qu'un statut du dispositif électronique est un état d'écran verrouillé ;
l'affichage (S502), par le premier affichage, d'une première interface de verrouillage d'écran (103) à l'aide de la première application, et l'affichage, par le second affichage, d'une seconde interface de verrouillage d'écran (104) à l'aide de la deuxième application, dans lequel la première interface de verrouillage d'écran est différente de la seconde interface de verrouillage d'écran ;
l'envoi (S504'), par la deuxième application, d'un premier message à la première application en réponse à la réception (S503') d'une deuxième opération réalisée par l'utilisateur sur le second affichage ;
en réponse au premier message, l'affichage (S505'), par la première application, d'une première interface déverrouillée à l'aide du premier affichage, et l'indication au dispositif électronique de passer de l'état verrouillé à un état déverrouillé ;
l'envoi (S507'), par la première application, d'un second message à la deuxième application ; et
en réponse au second message, l'affichage (S508'), par la deuxième application, d'une seconde interface déverrouillée à l'aide du second affichage.

2. Procédé selon la revendication 1, dans lequel le dispositif électronique (100) comprend en outre un gestionnaire de mots de passe, et l'envoi (S504'), par la deuxième application, d'un premier message à la première application en réponse à la réception d'une deuxième opération réalisée par l'utilisateur sur le second affichage (2) comprend :
l'affichage, par le second affichage, d'une première interface en réponse à la réception de la deuxième opération réalisée par l'utilisateur sur le second affichage, dans lequel la première interface comprend une zone d'entrée de mot de passe ; et
en réponse à la réception d'une opération d'entrée de mot de passe dans la zone d'entrée de mot de passe par l'utilisateur, l'envoi, par la deuxième application, du premier message à la première application, dans lequel le premier message contient le mot de passe ; et
la première application est utilisée pour envoyer le mot de passe au gestionnaire de mots de passe, et le gestionnaire de mots de passe réalise une vérification sur le mot de passe ; et
après que la vérification sur le mot de passe a réussi, la première application affiche la première interface déverrouillée à l'aide du premier affichage (1).

3. Procédé selon la revendication 1, comprenant en outre :
l'affichage, par le second affichage (2), de premières informations d'invite en réponse à la réception de la deuxième opération réalisée par l'utilisateur sur le second affichage, dans lequel les premières informations d'invite sont utilisées pour inviter l'utilisateur à réaliser le déverrouillage selon un mode de déverrouillage prédéfini.

4. Procédé selon la revendication 1, dans lequel le dispositif électronique (100) comprend en outre un gestionnaire d'authentification faciale, et le premier message contient des informations d'indication d'authentification faciale ; et
la première application est en outre utilisée pour envoyer le premier message au gestionnaire d'authentification faciale, et le gestionnaire d'authentification faciale réalise, sur la base du premier message, une authentification sur une image faciale capturée par le dispositif électronique ; et après que l'authentification sur l'image faciale a réussi, la première application affiche la première interface déverrouillée à l'aide du premier affichage (1).

5. Procédé selon la revendication 4, comprenant en outre :
l'affichage, par le second affichage (2), de secondes informations d'invite en réponse à la réception de la deuxième opération réalisée par l'utilisateur sur le second affichage, dans lequel les secondes informations d'invite sont utilisées pour informer l'utilisateur qu'une reconnaissance faciale est en cours de réalisation.

6. Procédé selon la revendication 5, dans lequel une forme d'affichage des secondes informations d'invite comprend un texte, une image ou une icône d'état de respiration.

7. Procédé selon l'une quelconque des revendications 1 à 6, comprenant en outre :
lorsqu'un état d'écran du second affichage (2) est un état verrouillé, la commutation d'une interface du second affichage de la seconde interface de verrouillage d'écran (104) vers une seconde interface en réponse à la réception d'une troisième opération réalisée par l'utilisateur sur le second affichage, dans lequel la seconde interface est utilisée pour afficher une barre de notifications déroulante, une notification, un widget d'une troisième application ou une icône d'application de la troisième application.

8. Procédé selon l'une quelconque des revendications 1 à 7, dans lequel la première interface de verrouillage d'écran (103) comprend l'heure, une date et une icône de verrouillage ; et la seconde interface de verrouillage d'écran (104) comprend au moins l'un des éléments suivants : une icône d'application, un message de notification, des conditions météorologiques, des informations de navigation et des informations d'invite de déverrouillage.

9. Procédé de déverrouillage multi-écran, appliqué à un dispositif électronique (100) unique ayant un premier affichage (1) et un second affichage (2), le premier affichage correspondant à une première application, le second affichage correspondant à une deuxième application, et le procédé comprend :
en réponse à la réception (S501) d'une première opération réalisée par un utilisateur sur le dispositif électronique, la détermination, par le dispositif électronique, qu'un statut du dispositif électronique est un état d'écran verrouillé ;
l'affichage (S502), par le premier affichage, d'une première interface de verrouillage d'écran (103) à l'aide de la première application, et l'affichage, par le second affichage, d'une seconde interface de verrouillage d'écran (104) à l'aide de la deuxième application, dans lequel la première interface de verrouillage d'écran est différente de la seconde interface de verrouillage d'écran ;
l'affichage (S504), par le second affichage, d'une seconde interface déverrouillée en réponse à la réception d'une deuxième opération réalisée par l'utilisateur sur le second affichage ;
l'indication (S505), par la deuxième application, que le dispositif électronique passe de l'état d'écran verrouillé à un état déverrouillé, et l'envoi, par la deuxième application, d'un premier message à la première application ; et
en réponse au premier message, l'affichage (S506), par la première application, d'une première interface déverrouillée à l'aide du premier affichage.

10. Procédé selon la revendication 9, dans lequel le dispositif électronique (100) comprend en outre un gestionnaire de mots de passe, et l'affichage (S504), par le second affichage (2), d'une seconde interface déverrouillée en réponse à la réception d'une deuxième opération réalisée par l'utilisateur sur le second affichage, comprend :
l'affichage, par le second affichage, d'une première interface en réponse à la réception de la deuxième opération réalisée par l'utilisateur sur le second affichage, dans lequel la première interface comprend une zone d'entrée de mot de passe ;
en réponse à la réception d'une opération d'entrée d'un mot de passe dans la zone d'entrée du mot de passe par l'utilisateur, l'envoi, par la deuxième application, du mot de passe au gestionnaire de mots de passe à l'aide de la première application ;
la réalisation, par le gestionnaire de mots de passe, d'une vérification sur le mot de passe ; et
après que la vérification sur le mot de passe a réussi, l'affichage, par le second affichage, de la seconde interface déverrouillée.

11. Procédé selon la revendication 9, dans lequel le dispositif électronique (100) comprend en outre un gestionnaire de mots de passe, et l'affichage (S504), par le second affichage, d'une seconde interface déverrouillée en réponse à la réception d'une deuxième opération réalisée par l'utilisateur sur le second affichage (2), comprend :
l'affichage, par le second affichage, de premières informations d'invite en réponse à la réception de la deuxième opération réalisée par l'utilisateur sur le second affichage, dans lequel les premières informations d'invite sont utilisées pour inviter l'utilisateur à réaliser le déverrouillage selon un mode de déverrouillage prédéfini.

12. Procédé selon la revendication 9, dans lequel le dispositif électronique (100) comprend en outre un gestionnaire d'authentification faciale, et l'affichage (S504), par le second affichage (2), d'une seconde interface déverrouillée en réponse à la réception d'une deuxième opération réalisée par l'utilisateur sur le second affichage, comprend :
l'envoi, par la deuxième application, d'un second message à la première application en réponse à la réception de la deuxième opération réalisée par l'utilisateur sur le second affichage, dans lequel le second message contient des informations d'indication d'authentification faciale ;
l'envoi, par la première application, du second message au gestionnaire d'authentification faciale ;
la réalisation, par le gestionnaire d'authentification faciale sur la base du second message, d'une authentification sur une image faciale capturée par le dispositif électronique ; et
après que l'authentification sur l'image faciale a réussi, l'affichage, par le second affichage, de la seconde interface déverrouillée.

13. Procédé selon la revendication 12, comprenant en outre :
l'affichage, par le second affichage (2), de secondes informations d'invite en réponse à la réception de la deuxième opération réalisée par l'utilisateur sur le second affichage, dans lequel les secondes informations d'invite sont utilisées pour informer l'utilisateur qu'une reconnaissance faciale est en cours de réalisation.

14. Procédé selon la revendication 13, dans lequel une forme d'affichage des secondes informations d'invite comprend un texte, une image ou une icône d'état de respiration.

15. Dispositif électronique (100) unique ayant un premier affichage (1) et un second affichage (2), comprenant un ou plusieurs processeurs (310) et une mémoire (331), dans lequel la mémoire stocke un code ; et lorsque le code est exécuté par les un ou plusieurs processeurs, le dispositif électronique unique réalise le procédé de déverrouillage multi-écran selon l'une quelconque des revendications 1 à 14.
